Europäisches Patentamt

European Patent Office

Office européen des brevets

(19)

(11) **EP 1 378 822 A1**

(12) **EUROPEAN PATENT APPLICATION**
published in accordance with Art. 158(3) EPC

(43) Date of publication:
**07.01.2004 Bulletin 2004/02**

(51) Int Cl.⁷: **G06F 9/06**, G06F 9/445

(21) Application number: **02712447.8**

(86) International application number:
**PCT/JP2002/001407**

(22) Date of filing: **19.02.2002**

(87) International publication number:
**WO 2002/077798 (03.10.2002 Gazette 2002/40)**

(84) Designated Contracting States:
**AT BE CH CY DE DK ES FI FR GB GR IE IT LI LU MC NL PT SE TR**

(30) Priority: **27.03.2001 JP 2001091274**
**01.11.2001 JP 2001336040**

(71) Applicant: **Sony Corporation**
**Tokyo 141-0001 (JP)**

(72) Inventor: **GAMO, Tsutomu,**
**c/o SONY CORPORATION**
**Tokyo 141-0001 (JP)**

(74) Representative: **Nicholls, Michael John**
**J.A. KEMP & CO.**
**14, South Square**
**Gray's Inn**
**London WC1R 5JJ (GB)**

(54) **DATA PROCESSING SYSTEM AND DATA PROCESSING METHOD, INFORMATION PROCESSING DEVICE AND INFORMATION PROCESSING METHOD, AND STORAGE MEDIUM**

(57) A higher speed of a data transfer process is realized when a module is downloaded from a server to a client.

Each module is classified based on characteristics, the module is reconfigured by new constituent elements, and information in which characteristics are described is made to correspond to the configured module. When the client downloads and uses the module, only the new constituent elements containing a portion of the module that is used at first are downloaded, and thereafter, the download is performed in units of the new constituent element as necessary. Thus, a higher speed of download, and download which is concurrent to the use of the module, are realized.

FIG. 1

**Description**

[Technical Field]

The present invention relates to a data processing system and a data processing method for processing data transfer, for example, downloading a module from a server to a client, or transferring data from a peripheral device connected via a system bus, in a network system formed of the server for managing modules and clients who download and use a module, to an information processing apparatus and an information processing method for use therewith, and to a storage medium therefor.

More specifically, the present invention relates to a data processing system and a data processing method, in which a higher-speed downloading process on the client side and a higher-speed data transfer from a peripheral device are achieved, to an information processing apparatus and an information processing method for use therewith, and to a storage medium therefor.

[Background Art]

So-called computer processing is realized in a form in which a predetermined program is executed in a processor.

In the field of recent software development, object oriented technology in which importance is placed on data to be processed rather than on a processing procedure has been increasingly adopted. In general, according to object oriented technology, it is considered that efficiency of software development and maintenance is improved. Object oriented software is basically handled in units of modules called "objects" in which data and a processing procedure for the data are integrated. Furthermore, one piece of software is completed by creating a plurality of objects or by combining them as necessary. Of course, downloading of programs can be handled in units of modules.

There is a method in which modules are stored in storage devices connected to a client via a bus, etc., in order to manage the modules, and when executing a program, the client downloads the program from the storage device and executes it. Furthermore, in a data processing system formed of clients and a server, there is a method in which programs are stored and managed in the server, and when executing the program, the client downloads the program and executes it. In this specification, these are called "download execution" of programs.

When the client performs program download execution from an apparatus such as a server, prior to executing the program, it is necessary to wait for the downloading to be completed. Such a delay during program execution is called a "download execution delay". Hereafter, a storage device for managing modules connected to the client is called a "module management apparatus".

Hitherto, to solve the problem of the download execution delay from the module management apparatus connected to the client, the transfer rate between the module management apparatus and the client has been increased. For example, when a hard disk unit connected as a module management apparatus to the client is to be used, the density of the hard disk unit has been made higher and the rotational speed thereof has been increased. Also, the transfer rate has been increased due to the increase of the transfer rate of a connection bus between the hard disk unit and the client and the increase of the transfer width.

Furthermore, a cache is provided between the module management apparatus and the client, so that, regarding the data stored in the cache, by omitting an actual access to the module management apparatus, the transfer rate is seemingly increased.

On the other hand, in a system formed of clients and a server, examples in which, when executing a program, a function for downloading the program on demand and executing the program is provided, include a "Java applet" developed by Sun Microsystems Incorporated in the United States. Strictly speaking, this is software created by customizing an applet class provided by the development and execution environment of Java, and its functions can be expanded by combining the Java applet with the Web page which is usually written in an HTML (Hyper Text Markup Language) format. In an HTML file, an <APPLET> tag is used to describe the place where the JAVA applet is stored. The JAVA applet is formed by a plurality of Java class files or by a "JAR" file in which those files are combined as one, and the files are stored and managed in the server.

When a Web page containing the Java applet is displayed, the code of the applet is downloaded from the WWW (World Wide Web) server and is executed in the server. The execution of the Java applet is usually performed by a Java VM (Virtual Machine) possessed by the Web browser. In Java, a source file is compiled into an intermediate language called "byte code" in a machine-independent format, and the Java VM downloads this byte code and executes it. If the Java class referred to during the execution of the Java applet does not exist in the Java VM, the Java VM stops the execution of the Java applet, requests the server to download a request for downloading the Java class file, and restarts the execution after the downloading is completed.

For this reason, when executing the Java applet, a program execution delay due to the waiting for the downloading to be completed occurs, presenting the problem that this causes the performance of the program execution to be decreased. This delay corresponds to the above-described "download execution delay". In particular, during the start-up of the program, since most of Java classes do not exist in the Java VM, the download execution delay increases. In this case, there is no concurrentness between the execution of the program and the downloading thereof.

To solve the problem of the download execution delay, several research and development has been made on Java applets.

In one technique, the Java class is divided into two portions which are used at a high frequency and at a low frequency by using the profile data indicating the behavior of the program and the results such that the structure of the program is analyzed. Then, when the request for downloading the Java class is made by the Java VM, by downloading only the portion which is used at a high frequency, the amount of transfer is reduced to shorten the start-up time.

In another technique, the methods within the Java class are rearranged in a use sequence which is predicted by using the profile data and the results of the program structure analysis. The downloading of the Java class is started from the server side at a predetermined timing. Then, the Java VM starts execution when the necessary method and data are completely downloaded without waiting for the Java class to be completely downloaded, thereby making the downloading and the program execution concurrent in order to reduce the download execution delay.

In another technique, the Java class is divided into a portion used at a high frequency and a portion used at a low frequency by using the profile data indicating the behavior of the program and the results such that the structure of the program is analyzed so as to reduce the amount of transfer, and a command for prefetching another Java class is inserted in advance into the Java program when the program is created, thereby making the downloading and the program execution concurrent in order to reduce the download execution delay.

In order to download a module from the module management apparatus into the client and execute it, it is necessary to wait for the downloading of the module to be completed. Therefore, there is a problem in that the processing speed is decreased. As a method of solving this problem, the transfer rate between the module management apparatus and the client is increased (described above). However, since the transfer rate is lower than the module execution speed of the client, the download execution delay is not sufficiently solved.

Even if a cache is present between the module management apparatus and the client, since there is a limitation on the cache capacity, all the modules cannot be placed in the cache, and the download execution delay is not sufficiently solved. Furthermore, since a determination as to which data is made to remain in the cache is performed by a mechanical algorithm such as LRU (Least Recently Used), this is not always effective for reducing the download execution delay.

On the other hand, the download execution delay in the system formed of clients and a server is not just a problem specific to the Java applet, but is a problem in all systems in which a module is downloaded from the server.

As a method of solving this download execution delay, a technique (described above) in which a Java class is divided into two portions according to the use frequency has been proposed. However, this technique has problems in that, although this is effective for a comparatively small program such as a Java applet, sufficient improvements cannot be expected if only the Java class is simply divided into two portions as a program to be downloaded becomes multifunctional and the size of the program increases in the future.

In a conventional technique, a prefetch is issued by the server, or a prefetch is issued by embedding it as a prefetch command in the program. For this reason, in a case where the program execution performance of a client device differs from that which is presumed or where the transfer rate of the network changes from the presumed speed as the device is moved during execution, there is also a problem in that sufficient performance cannot be exhibited. Furthermore, when the program is composed of a plurality of components and some of the components are corrected, since the size of the components changes, there is also a problem in that the timing of a prefetch is not at an optimum time.

Depending on the client device, there are cases in which a cache memory is incorporated and it can be used to temporarily store a downloaded program and in which the program execution performance is high and the compressed program can be expanded on the client side. In order to use the cache and compression functions, separate handling becomes necessary, presenting the problem in that the flexibility is poor.

[Disclosure of the Invention]

The present invention has been made in view of the above-described technical problems. An object of the present invention is to provide a superior data processing system and a superior data processing method, which are capable of reducing the download execution delay by flexibly coping with the performance and the functions of client devices and the variety of transfer rates between a module management apparatus and client devices, a superior information processing apparatus and a superior information processing method for use therewith, and a storage medium therefor.

Another object of the present invention is to provide a superior data processing system and a superior data processing method, which are capable of reducing the download execution delay by flexibly coping with the performance and the functions of client devices and the variety of transfer rates of the network, a superior information processing apparatus and a superior information processing method for use therewith, and a storage medium therefor.

The present invention has been achieved in consideration of the above-described problems. A first aspect of the present invention is directed to a data processing system comprising a module management apparatus for managing modules and a client who transfers a module from the module management apparatus and uses the module,

wherein, in the module management apparatus, basic constituent elements of a module are classified based on individual characteristics, the module is reconfigured by new constituent elements composed of a plurality of basic constituent elements, corresponding characteristics are described as characteristic information in the individual basic constituent elements, and the new constituent elements which are reconfigured in response to a request from the client and the characteristic information thereof are transmitted, and

in the client, when the module is transferred from the module management apparatus and is used, a process corresponding to the characteristic information associated with the new constituent elements is performed transparently to the use of the module.

The "system" referred to herein refers to a logical assembly of a plurality of devices (or function modules which realize specific functions), and it does not particularly matter whether or not each device and function module is within a single housing.

A second aspect of the present invention is directed to a data processing method for transferring a module managed in a module management apparatus to a client and for using the module, the data processing method comprising:

a step in which, in the module management apparatus, basic constituent elements of a module are classified based on individual characteristics, the module is reconfigured based on new constituent elements composed of a plurality of basic constituent elements, corresponding characteristics are described as characteristic information in the individual basic constituent elements, and the new constituent elements which are reconfigured in response to a request from the client and the characteristic information thereof are transmitted; and

a step in which, in the client, when the module is transferred from the module management apparatus and is used, a process corresponding to the characteristic information associated with the new constituent elements is performed transparently to the use of the module.

In the data processing system or the data processing method in accordance with the first or second of the present invention, the module management apparatus is, for example, a server which is interconnected to clients via a network. Alternatively, the module management apparatus may be a peripheral device, such as a hard disk unit or a DVD drive unit, which is interconnected via a bus to clients within a predetermined device.

The module is, for example, a computer program written in a computer-readable format. The module may be data which can be disassembled into basic constituent elements.

According to the data processing system or the data processing method in accordance with the first or second aspect of the present invention, by reconfiguring the module, such as a program, composed of a plurality of basic constituent elements by new constituent elements called "phrases", portions which are not necessary for the execution of the program can be classified, and only the program portions required for the execution can be transferred to the client side. Furthermore, by causing characteristic information called an "annotation" to correspond to a phrase, a higher speed of download execution, in which uses of a plurality of techniques such as prefetch and cache are flexibly combined in their most suitable form according to various configurations of clients with respect to the same program, can be achieved.

In the module management apparatus, each new constituent element may be compressed using one or more compression methods, the information thereof may be described in the corresponding characteristic information, and a new constituent element compressed by a compression method corresponding to an expansion method possessed by the client may be transmitted when the report of the compression method is received.

In the module management apparatus, each new constituent element contained in the module may be individually compressed, and when the report of a plurality of expansion methods is received from the client, the new constituent element compressed by the most suitable method among the methods may be transmitted.

A third aspect of the present invention is directed to an information processing apparatus or method for providing a module to an external device, the information processing apparatus or method comprising:

module reconfiguring means or step for classifying the basic constituent elements of a module on the basis of individual characteristics and reconfiguring the module by the new constituent elements composed of a plurality of basic constituent elements;

characteristic information describing means or step for describing corresponding characteristics as characteristic information in the individual new constituent elements; and

information transmission means or step for transmitting the new reconfigured constituent elements and the characteristic information thereof in response to a request from the external device.

Here, the module is, for example, a computer program which is written in a computer-readable format. The module may be data which can be disassembled into basic constituent elements.

The information processing apparatus in accordance with the third aspect of the present invention can operate as, for example, a server for providing/distributing a module on a computer network. The external device which receives the provision of a module from the server and which uses this module corresponds to a client. Alternatively, the information processing apparatus in accordance with the third aspect of the present invention corresponds to a peripheral device, such as a hard disk unit or a DVD drive unit, which is connected via a bus to a client within a single device.

According to the information processing apparatus or the information'processing method in accordance with the third aspect of the present invention, on the server side, by considering the reference relationship at the program execution time and the download efficiency, the original program composed of a plurality of basic constituent elements is classified into new constituent elements called "phrases", and the program is reconfigured. Characteristic information called an "annotation", as information indicating the characteristics of that phrase, is made to correspond to each phrase.

In such a case, on the client side, by using the information of the annotation, the speed of download execution can be increased by flexibly combining a prefetch technique, which is suitable for devices of the client, and techniques such as cache and compression.

Here, the information transmission means or step may first transmit only the new constituent element containing a portion of the module that is used at first by the external device, and thereafter, the transmission may be performed in units of the new constituent element as necessary.

Furthermore, the information transmission means or step may first transmit only the new constituent element containing a portion of the module that is used at first by the external device, that is, the client, and thereafter, by referring to the characteristic information, the information transmission means or step may transmit the new constituent element which is not yet transmitted concurrently to the use of the module in the client before the use of the module in the client reaches the new constituent element which is not yet transmitted. As a result, in the client, it is possible to realize concurrentness between the use of the module and the download thereof, and a higher speed of download.

In the module reconfiguring means or step, the new constituent element may be compressed by using one or more compression methods and the information thereof may be described in corresponding characteristic information. In such a case, in the information transmission means or step, a new constituent element which is compressed by a compression method corresponding to an expansion method possessed by the external device, that is, the client, can be transmitted when the report of the expansion method is received.

In the information processing apparatus or the information processing method in accordance with the third aspect of the present invention, a compression process may be performed by using a compression method which is different for each new constituent element. Therefore, in the information transmission means or step, when the report of a plurality of expansion methods is received from the external device, that is, the client, the new constituent element compressed by the most suitable method among the methods may be transmitted.

A fourth aspect of the present invention is directed to an information processing apparatus or an information processing method for using a module, the information processing apparatus or method comprising:

data transferring means or step for transferring a module from an external device; and

module using means or step for using the module;

wherein the module is reconfigured by new constituent elements, which are classified based on individual characteristics, composed of a plurality of basic constituent elements,

each new constituent element is associated with characteristic information, and

when the module transferred in the data transferring means or step is to be used by the module using means, a process corresponding to the characteristic information associated with the new constituent element is performed transparently to the use of the module.

Here, the module is, for example, a computer program which is written in a computer-readable format. The module may be data which can be disassembled into basic constituent elements.

The information processing apparatus in accordance with the fourth aspect of the present invention can operate as, for example, a client who downloads a module from an external device and which uses this module on a computer network. The external device who provides a module to this information processing apparatus corresponds to a server connected via a network to a client or a peripheral device, such as a hard disk unit or a DVD drive unit, which is connected via a bus to a client.

According to the information processing apparatus or the information processing method in accordance with the fourth aspect of the present invention, on the server side, by considering the reference relationship during program execution and the download efficiency, the original program is classified into new constituent elements called "phrases" and the program is reconfigured. Characteristic information called an "annotation", as information indicating the characteristics of a phrase, is made to correspond to each phrase.

Therefore, on the client side, by using the information of the annotation, the speed of download execution can be increased by flexibly combining a prefetch technique, which is suitable for devices of the client, and techniques such as cache and compression.

There are cases in which characteristic information on each new constituent element is downloaded from the server, in which the characteristic information is locally stored on the client side, and in which the downloaded characteristic information and the local characteristic information are combined and used. For example, the characteristic information which is downloaded and used is such that general characteristics of the module are described, and characteristic information which is locally possessed by the client is such that characteristics regarding individual clients are described.

Here, in the data transferring means or step, only the new constituent element containing a portion of the module that is used at first in the module using means or step may be transferred first, and thereafter, the transfer may be performed in units of the new constituent element as necessary.

In the data transferring means or step, only the new constituent element containing a portion of the module that is used at first in the module using means or step may be transferred first, and thereafter, by referring to the characteristic information, the new constituent element may be transferred concurrently to the use of the module before the use of the module by the module using means or step reaches the new constituent element which is not yet transferred. As a result, it is possible to realize concurrentness between the use of the module and the download thereof, and a higher speed of download.

The information processing apparatus in accordance with the fourth aspect of the present invention may further comprise a cache for temporarily storing the new transferred constituent element. In such a case, the new constituent element may be selected by using the characteristic information, may be transferred by the data transferring means or step, and may be stored in the cache. When the module is to be used in the module using means or step, the status of the cache may be checked before the data transferring means or step requests an external device, that is, a server, to transfer data, and when the new constituent element of the module has already been stored in the cache, it can be used. As a result, concurrentness between the use of the module and the download thereof, and the effect of a higher speed of download can be increased.

The information processing apparatus or method may further comprise expansion means or step for expanding compressed data by a predetermined expansion method. In such a case, in the data transferring means or step, the expansion method may be reported to the external device, that is, the server, when a data transfer request is made, and the new constituent element which is compressed by the compression method corresponding to this expansion method may be selectively transferred. In the module using means or step, the new constituent element transferred in the expansion means or step may be used, that is, executed after the new constituent element is expanded.

A compression process may be performed by using a compression method which is different for each new constituent element contained in the module. For this reason, the expansion means or step may include a plurality of expansion methods. In such a case, in the data transferring means or step, the plurality of expansion methods may be reported to the external device, that is, the server, when a data transfer request is made, and the new constituent element which is compressed by the most suitable method may be selectively transferred.

In the manner described above, according to the present invention, the program is reconfigured in such a manner that information in which characteristics of a program are described is added to the constituent elements of the program and the constituent elements of the program having the same characteristics are combined based on that information. As a result, the program is represented as the new constituent elements, that is, a set of "phrases", which are a set of constituent elements of the program having the same characteristics, and the characteristic information in which the characteristics are described, that is, an "annotation", is made to correspond to each new constituent element.

Next, upon receiving the program execution request, the client execution environment transfers only the characteristic information corresponding to the initial new constituent element of the program from the module management apparatus such as the server to the client. Then, concurrently to the start of the execution of the new constituent element, an appropriate process in accordance with the execution environment is performed by using the characteristic information, the status of the client execution environment, and the status of the network. As a result, it is not necessary for the download execution to wait for the completion of the download of all the programs, and thus the program can be executed without causing a download execution delay by downloading only the portion required to execute the program at that time.

As the characteristics of the new constituent elements of the reconfigured program, for example, the reference relationship between the constituent elements of the program, is used. As a result, the constituent elements of the program having a strong reference relationship can be combined as one new constituent element, that is, a "phrase".

The characteristic information, that is, an "annotation", can be made to have information for a new reference element which is referred to by the new constituent element. Since the client execution environment processes such characteristic information by considering varying elements such as the program execution speed of the client and the current transfer rate of the network, the new constituent element which is expected to be referred to next can be downloaded at an appropriate timing before reference by the execution of the program occurs. As a result, the program execution and the download can be operated concurrently in a form which is most suitable for the execution environment of the client, and thus, the download execution delay can be reduced.

A portion of the characteristic information may have information on use frequency. When the client device has a usable cache, by adding a cache management object, the cache can be used, and thus the download from the server can be partly omitted when the program is executed at the next time. The cache management object stores data in the cache by considering the size of the cache and the current usage, and performs the management thereof.

The client execution environment reports the functions possessed by the client execution environment when a download request is made to the server. At this time, by reporting the type of program compression/expansion possessed by the client execution environment, the server can select the program compressed by the compression method corresponding to the expansion method of the type possessed by the client, and can use the program. As a result, the amount of program transfer can be reduced, and the download execution delay can be reduced.

A fifth aspect of the present invention is directed to a storage medium having physically stored thereon in a computer-readable format computer software written so as to execute data processing for managing and using a module composed of a plurality of basic constituent elements on a computer system, the computer software comprising:

a step of classifying the basic constituent elements of the module on the basis of individual characteristics in order to reconfigure the module by the new constituent elements composed of a plurality of basic constituent elements, and managing the module by describing corresponding characteristics as characteristic information in individual new constituent elements; and

a step of performing a process corresponding to the characteristic information associated with the new constituent element in such a manner as to be transparent to the use of the module when the module is used.

A sixth aspect of the present invention is directed to a storage medium having physically stored thereon in a computer-readable format computer software written so as to perform a process for providing a module to an external device on a computer system, the computer software comprising:

a module reconfiguring step of classifying basic constituent elements of the module on the basis of individual characteristics in order to reconfigure the module by the new constituent elements composed of a plurality of basic constituent elements;

a characteristic information describing step of describing corresponding characteristics as characteristic information in individual new constituent elements; and

an information transmission step of transmitting the new reconfigured constituent elements and the characteristic information thereof in response to a request from the external device.

A seventh aspect of the present invention is directed to a storage medium having physically stored thereon in a computer-readable format computer software written so as to perform a process for using a module on a computer system, the computer software comprising:

a data transferring step of transferring a module from an external device; and
a module using step of using the module,

wherein the module is reconfigured by new constituent elements, which are classified based on individual characteristics, composed of a plurality of basic constituent elements, and

when the module transferred in the data transferring step is to be used in the module using step, a process corresponding to the characteristic information associated with the new constituent element is performed transparently to the use of the module.

The storage medium in accordance with each of the fifth to seventh aspects of the present invention is a medium for providing various codes in a computer-readable format to, for example, a general-purpose computer system capable of executing computer software. Such a medium is, for example, a removable, portable storage medium, such as a DVD (Digital Versatile Disc) a CD (Compact Disc), an FD (Flexible Disk), or an MO (Magneto-Optical Disc). Alternatively, the provision of computer software to a specific computer system via a transmission medium such as a network (it does not matter whether the network is wireless or wired) is technically possible.

The storage medium in accordance with each of the fifth to seventh aspects of the present invention defines the structural or functional cooperative relationship between computer software and the storage medium for realizing the functions of predetermined computer software on a computer system. In other words, by installing predetermined computer software into a computer system via a storage medium according to each of the fifth or seventh aspect of the present invention, cooperative effects are exhibited on the computer system, and the same operational effects as those of the data processing system or the data processing method in accordance with the first or second aspect of the present invention, the information processing apparatus or the information processing method in accordance with the third aspect of the present invention, and the information processing apparatus or the information processing method in accordance with the fourth aspect of the present invention, can be obtained.

Further objects, features and advantages of the present invention will become apparent from the following detailed description of the following embodiments of the present invention with reference to the attached drawings.

[Brief Description of the Drawings]

Fig. 1 schematically shows the configuration of a data processing system according to a first embodiment of the present invention.

Fig. 2 shows in an enlarged manner a program recorded by a DVD 1.

Fig. 3 schematically shows an example of the structure of an annotation.

Fig. 4 shows in more detail the structure of a client 2 shown in Fig. 1.

Fig. 5 is a sequence diagram showing the processing flow when an execution environment 2-1 issues a program starting request.

Fig. 6 schematically shows an example of the configuration of a computer network by which data processing is realized according to a second embodiment of the present invention.

Fig. 7 schematically shows the structure of a program stored by a server 11.

Fig. 8 schematically shows an example of the structure of an annotation.

Fig. 9 is a block diagram schematically showing the function structure of a client 12 shown in Fig. 6.

Fig. 10 is a block diagram schematically showing the function structure of a client 13 shown in Fig. 6.

Fig. 11 shows the processing flow when an execution environment (ExecSpace) 12-4 of the client 12 issues a program starting request.

Fig. 12 shows the processing flow when an execution environment (ExecSpace) 13-2 of the client 13 issues a program starting request.

[Best Mode for Carrying Out the Invention]

Embodiments of the present invention will now be described below with reference to the drawings.

A. First Embodiment

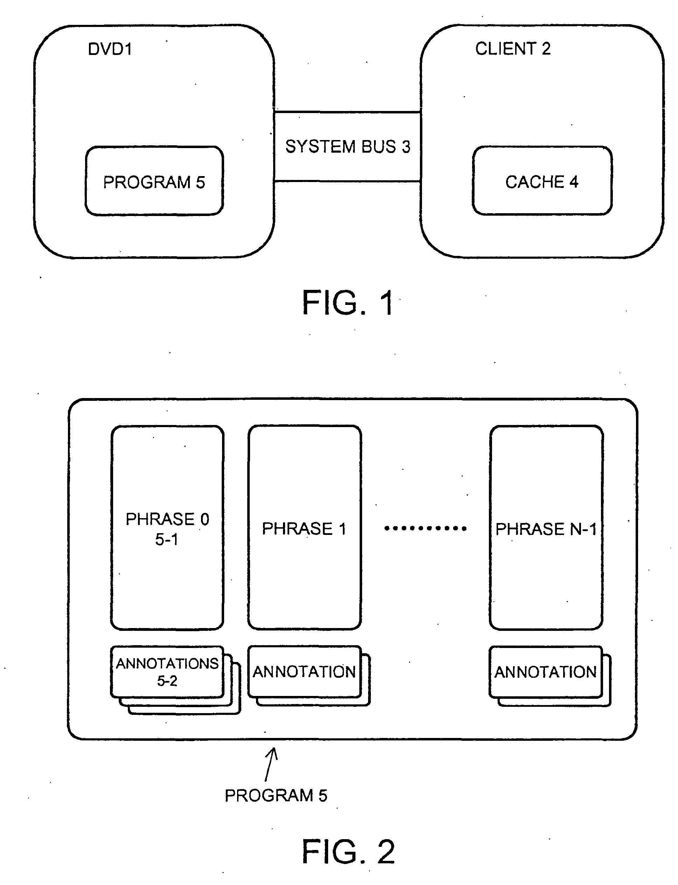

Fig. 1 schematically shows the configuration of a data processing system according to a first embodiment of the present invention. As shown in Fig. 1, the system includes a DVD 1, a client 2, and a system bus 3 which connect the above.

The DVD 1 is a peripheral device for reading and writing data from and to the recording surface of a DVD (Digital Versatile Disc). In this case, the DVD 1 functions as a module management apparatus for storing and managing programs, that is, modules, to be executed by the client 2.

It is assumed that, when executing a program 5, the client 2 downloads a program from the DVD 1 via the system bus 3, and executes the program. It is possible for the client 2 to have a cache 4 therein for speeding up download execution, so that a portion of the program can be placed in the cache 4 as necessary.

Fig. 2 shows in an enlarged manner a program recorded by the DVD 1. As shown in Fig. 2, the program 5 according to this embodiment is composed of a plurality of phrases 5-1 and a plurality of annotations 5-2.

The phrase 5-1 is such that methods and instances which originally form a program are classified on the basis of specific characteristics. As the characteristics, for example, reference characteristics of methods and instances, for example, methods and instances used at the start-up time of a program or methods and instances used when a specific button of the user interface of a program is pressed, are used. The classification is performed by using profile data obtained by actually executing a program using static data obtained by analyzing a program, or by using data given by a program creator.

The annotation is made to correspond to a phrase for the purpose of describing characteristics of the phrase.

In this embodiment, it is possible to cause a plurality of annotations to correspond to one phrase.

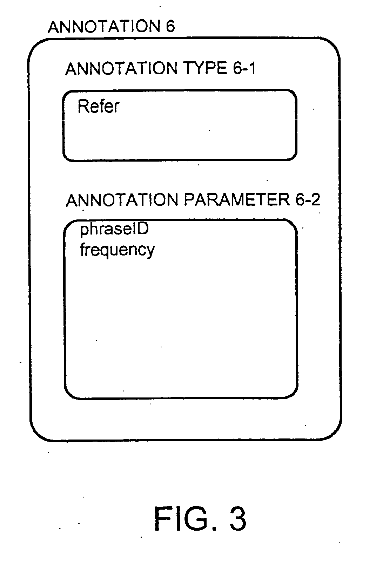

Fig. 3 schematically shows an example of the structure of an annotation. As shown in Fig. 3, an annotation 6 is broadly composed of two portions, that is, an annotation type 6-1 and an annotation parameter 6-2.

The annotation type 6-1 indicates the type of characteristics possessed by the annotation 6, and the annotation parameter 6-2 has the value of that type. In this embodiment, as the annotation type, one type of Refer is used. Here, Refer indicates the reference relationship between phrases.

The ID of the phrase which is predicted to be executed next to the phrase shown in the figure is described as an annotation parameter. Furthermore, in frequency, the frequency at which this phrase is used is described, and based on this frequency, the client is able to determine as to whether or not this phrase should be stored in the cache.

Invoke indicates that the phrase is a portion which is referred to at the start of the program execution. All the. annotations of these types are not made to correspond to all the phrases, and only the necessary annotations are made to correspond according 'to the characteristics of the phrase.

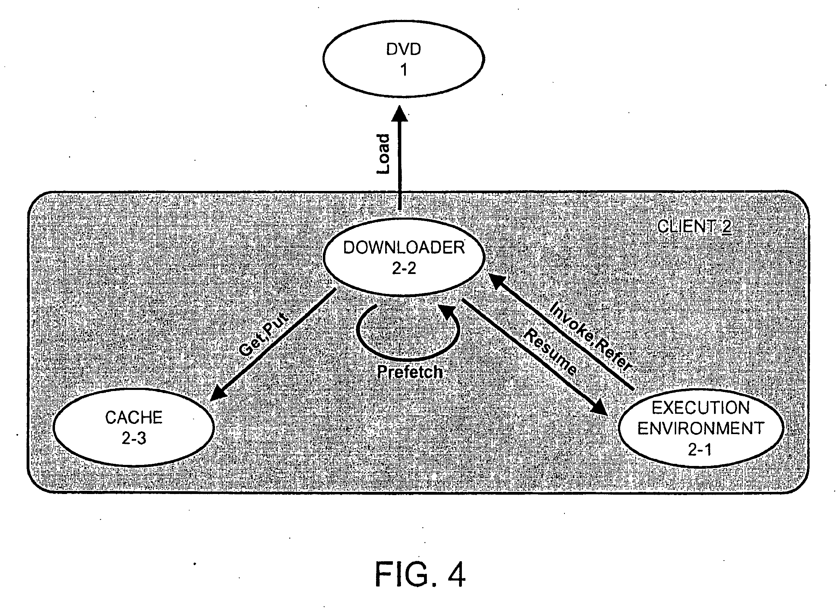

Fig. 4 shows in more detail the configuration of the client 2 shown in Fig. 1. The client 2 shown in Fig. 4 performs download execution in such a manner that a program is downloaded from the DVD 1 by using the annotation corresponding to the phrase as a unit.

In the example of the configuration shown in Fig. 4, the client 2 is composed of a plurality of parallel objects. The parallel object is formed of a plurality of methods which are externally published, a memory for storing the status of objects and the method main body, a single context for executing the method, and a message queue for managing messages which are not yet processed. The parallel object receives a method for the published method and processes one method at a time. The message received while the message is being processed is stored in the message queue.

Each of the objects forming the client 2 will now be described below.

Execution Environment (ExecSpace) 2-1:

The execution environment 2-1 is an object for executing a program and providing various services. Although, in practice, the execution environment 2-1 is formed by various objects and modules, in this specification, for the sake of description, it is collectively handled as one object.

The execution environment 2-1 has one method Resume regarding the download execution function. In practice, the execution environment 2-1 has many methods or services in addition to the above. However, since these are not related to the download execution, descriptions thereof are omitted here. The operation of Resume will now be described below.

Resume:

1. Sets a program portion specified by an argument so that it can be used. More specifically, operations, such as allocation of the program into the memory space, or registration thereof, are performed.
2. When an ID is specified by an argument, the execution of the corresponding program is restarted. The giving of meaning of the ID is performed by the execution environment 2-1. For the ID to be specified in the Resume, the ID specified when the execution environment 2-1 issues Refer is specified as is. In this embodiment, the execution environment 2-1 specifies ThreadID when Refer is issued. For this reason, during the execution of the Resume method, the execution of the thread corresponding to the ThreadID is restarted.

Downloader 2-2:

The downloader 2-2 solves an execution request and the reference from the execution environment 2-1, and realizes download execution and achieves a higher-speed download execution by performing a prefetch to the DVD 1 and by using a cache 2-3.

The downloader 2-2 has therein PhraseTable, PhraseMap, and ProgramMap. These will now be described first.

PhraseTable:

PhraseTable is a table for managing phrases. PhraseTable has entries corresponding to PhraseID, and each entry stores the downloaded status of the corresponding phrase. At the initialization time, PhraseTable is marked with "not_loaded" indicating that all the entries have not yet been downloaded. Furthermore, if the corresponding phrase and annotation have been downloaded, these can be registered in each entry. PhraseTable has sector information indicating in which sector of the DVD 1 the corresponding PhraseID is stored.

PhraseMap:

PhraseMap is data for managing the corresponding relationship between SymbolID and PhraseID. The use of this data makes it possible to convert SymbolID into PhraseID. PhraseMap is generated at the execution time on the basis of the data obtained from the DVD 1.

ProgramMap:

ProgramMap is data for managing the corresponding relationship between program names and PhraseID which is required at first by the program. The use of this data makes it possible to convert the program name into PhraseID. ProgramMap is recorded in a sector at a specific position of the DVD 1. The downloader reads this from the DVD 1 when the conversion becomes necessary at the first time and generates ProgramMap.

The downloader 2-2 has methods of Invoke, Refer, and Prefetch. The operation of each method will now be described below.

Invoke:

1. If ProgramMap is not yet generated, a load message is sent to the DVD 1 by specifying a specific sector to generate ProgramMap.
2. By using ProgramMap, PhraseID is obtained from the program name specified by an argument.
3. PhraseID is specified, and a Get message is sent to the cache 2-3 in order to obtain a phrase.
4. If the phrase does not exist in the cache 2-3, a Load message is issued to the DVD 1.
5. When there are Refer-type annotations in the obtained annotations corresponding to the obtained phrase,

   5-1. a Put message, together with the frequency information, is sent to the cache 2-3.
   5-2. a Prefetch message is sent to the downloader 2-2 by specifying the next PhraseID.

6. PhraseTable and PhraseMap are initialized.
7. A Resume message is sent to the execution environment 2-1, thereby restarting the execution.

Refer:

1. All the prefetch messages are deleted from the message queue of the downloader 2-2 itself.
2. SymbolID specified by the argument is converted into PhraseID. For this conversion, PhraseMap is used.
3. If the entry corresponding to PhraseID of PhraseTable is "not_loaded",

   3-1. a Get message is sent to the cache 2-3, obtaining a phrase.
   3-2. if the phrase does not exist in the cache 2-3, a Load message is issued to the DVD 1.
   3-3. if there are Refer-type annotations in the obtained annotations corresponding to the obtained phrase,

      (1) a Put message, together with the frequency information, is sent to the cache 2-3.
      (2) a Prefetch message is sent to the downloader 2-2 by specifying the next PhraseID.

   3-4. The status of PhraseTable, which corresponds to PhraseID, is marked with "finished" indicating the download completion.

4. A Resume message is sent to the execution environment 2-1, restarting execution.

Prefetch:

If the entry corresponding to PhraseID of PhraseTable is "not_loaded",

1. a Get message is sent to the cache 2-3, obtaining a phrase.
2. if the phrase does not exist in the cache 2-3, a Load message is sent to the DVD 1.
3. if there is an annotation, corresponding to the obtained phrase, which is of a Refer type,

  3-1. a Put message, together with the frequency information, is sent to the cache 2-3.
  3-2. a Prefetch message is sent to the downloader 2-2 by specifying the next PhraseID.

4. The status of PhraseTable, which corresponds to PhraseID, is marked with "finished" indicating the download completion.

Cache 2-3:

The cache 2-3 is an object for speeding up the download execution by storing phrases and annotations in a cache memory and by extracting them as necessary. The cache 2-3 has methods of Get and Put. The operation of these methods will now be described below.

Get:

1. It is checked whether the phrase corresponding to the PhraseID specified by the argument and the annotation corresponding thereto are stored in the cache memory.
2. When they are stored, the contents of the phrase and the annotation are returned.

Put:

1. By using the frequency information specified by the argument, it is determined whether the phrase specified by the argument and the annotation thereof should be stored in the cache memory.
2. When the area for storage is insufficient, the phrases and annotations, which are determined to be most unnecessary, are deleted until the area for storage can be allocated.
3. The specified phrase and annotation are stored in the cache memory in such a manner as to be associated with PhraseID specified by the argument.

DVD 1:

The DVD 1 is a module management apparatus, which is connected to the client 2, for managing and storing programs to be downloaded. In the DVD 1, its medium is divided into sectors, and the management thereof is performed. The DVD 1 has, in a specific sector, information on programs possessed by this medium.
The DVD 1 has a message of Load. Load is a message for returning the data of the sector information specified by the argument.

Start-up Scenario:

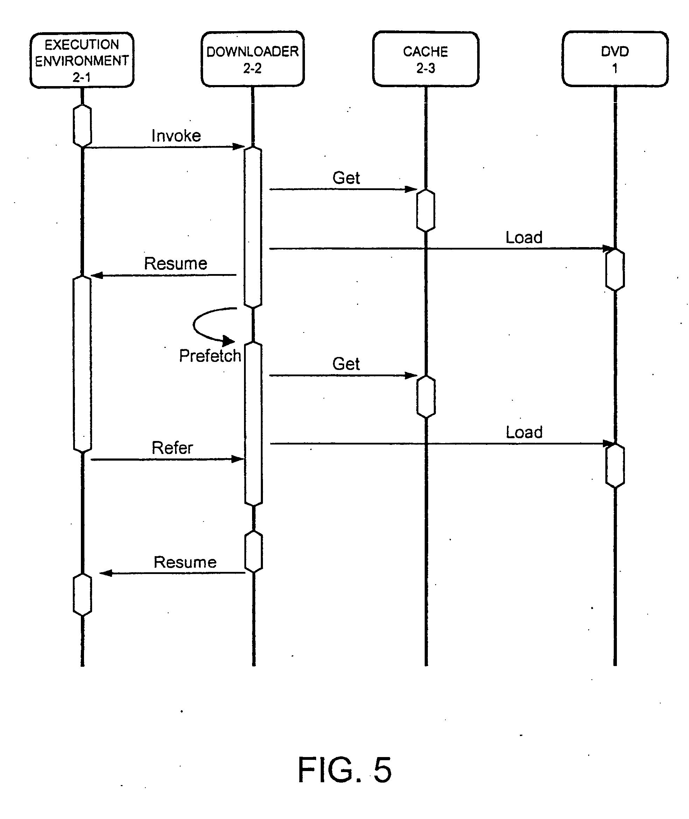

The operation of the system according to the first embodiment will now be described below. Fig. 5 shows the processing flow when the execution environment 2-1 issues a program starting request.
Upon receiving the program starting request from the user, the execution environment 2-1 specifies the program name and ThreadID for executing the program and sends an Invoke message to the downloader 2-2.
If ProgramMap is not initialized, the downloader 2-2 sends the Load message to the DVD 1 by using specific sector information as an argument, generating ProgramMap. In the start-up scenario shown in Fig. 5, it is assumed that ProgramMap has already been generated.
Next, the downloader 2-2 obtains PhraseID which is required at first from the specified program name by using ProgramMap. Then, the downloader 2-2 specifies PhraseID and sends a Get message to the cache 2-3. If the corresponding phrase and annotation are stored in the cache 2-3, these are returned. In the start-up scenario shown in Fig. 5, since it is the first start-up of the program, the cache 2-3 is assumed to have nothing stored. Since data could not be obtained from the cache 2-3, the downloader 2-2 issues a Load message to the DVD 1.
The DVD 1 returns to the downloader 2-2 the first phrase and annotation corresponding to PhraseID specified by the argument.

If there are Refer-type annotations in the obtained annotations, the downloader 2-2 sends the phrase and annotation as a Put message to the cache 2-3.

By using the frequency information of the specified annotation, the cache 2-3 determines whether or not the annotation and the phrase should be stored in the cache memory. When they should be stored, the storage is performed by confirming the free space of the cache memory. When the free space is insufficient, the phrase and the annotation to be deleted are determined by using the frequency information of the annotation corresponding to the stored phrase, and then they are deleted. This is repeated until the free space necessary for storage can be allocated.

The downloader 2-2 issues a Prefetch message to the downloader 2-2 itself by using the next PhraseID possessed by the Refer-type annotation as an argument. This message is stored in the message queue of the downloader 2-2.

Next, the downloader 2-2 initializes PhraseTable and PhraseMap, and issues a Resume message to the execution environment 2-1.

The execution environment 2-1 starts executing the program in response to the Resume message. At the same time as the above, the downloader 2-2 starts processing the next message.

In the start-up scenario shown in Fig. 5, the preceding Prefetch message is extracted from the message queue, and processing thereof is performed. Firstly, the entry of PhraseTable corresponding to PhraseID specified by the argument is checked. Since the status of the phrase stored by the entry is "not_loaded" in this scenario, a Get message is sent to the cache 2-3. Then, since the corresponding phrase and annotation do not exist in the cache memory, a Load message for obtaining sector data corresponding to the phrase and the annotation is issued to the DVD 1.

The DVD 1 returns the sector data corresponding to the sector information specified by the argument to the downloader 2-2.

If there are Refer-type annotations in the obtained annotations, the downloader 2-2 sends the phrase and the annotation as a Put message to the cache 2-3. Then, the status of PhraseTable is changed to "finished", and the phrase and the annotation are registered therein. Furthermore, finally, the downloader 2-2 issues a Prefetch message to the downloader 2-2 itself by using the next PhraseID possessed by the Refer-type annotation as an argument.

During the above processing, when the execution of the program by the execution environment 2-1 reaches the execution of the next phrase, a Refer message is sent to the downloader 2-2.

The downloader 2-2 starts the processing of the next message. In the start-up scenario shown in Fig. 5, it is assumed that the Refer message from the execution environment 2-1 is placed earlier than the Prefetch message of the second time. In such a case, the downloader 2-2 deletes all the Prefetch messages from the message queue of the downloader 2-2 itself.

Next, the downloader 2-2 converts the SymbolID specified by the argument into PhraseID by using PhraseMap. Then, the downloader 2-2 confirms the status by referring to PhraseTable. In the start-up scenario shown in Fig. 5, since the next phrase and annotation are registered in PhraseTable by the Prefetch message of the first time, a Resume message is sent to the execution environment 2-1 without issuing the Load message to the DVD 1.

As a result of the above, the program download execution becomes possible by using a prefetch and cache. Furthermore, also, for the client who does not have a cache, by not sending a Get message to the cache 2-3, handling is possible by using the same DVD 1.

In this embodiment, by considering the reference relationship and the downloading efficiency when a program is executed, the basic constituent elements of the program are classified into phrases so as to reconfigure the program. Then, each phrase is placed in the module management apparatus with an annotation, as that indicating the characteristics of a phrase, being made to correspond to the phrase. On the client side, by flexibly combining prefetch and cache techniques by using the information of the annotation, the download execution speed can be increased.

B. Second Embodiment

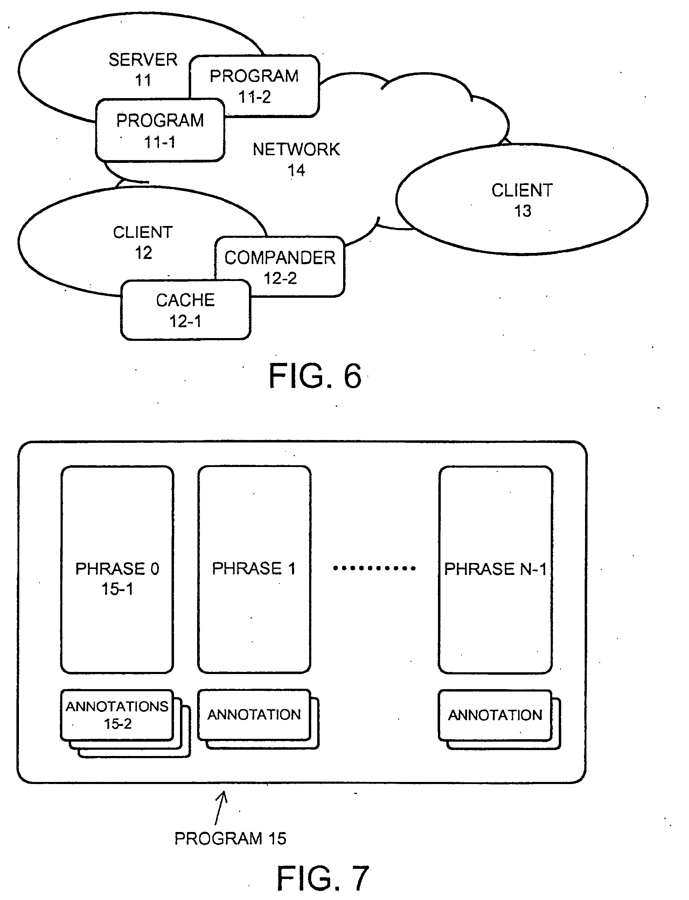

Fig. 6 schematically shows an example of the configuration of a computer network in which data processing according to the present invention is realized. The network system shown in Fig. 6 includes a server 11, one or more clients 12 and 13, and a network 14.

The server 11 has a plurality of programs such as a program 11-1 and a program 11-2, and can provide these to the clients 12 and 13 via a network 14. In the embodiment shown in Fig. 6, the program 11-1 is a program which is not compressed, and the program 11-2 is a program whose size is reduced by compression.

Furthermore, in the embodiment shown in Fig. 6, it is assumed that, in the network 14, two types of clients, that is, the client 12 and the client 13, exist. One of the clients 12 has therein a cache object 12-1 and a companding function 12-2. The other client 13 is assumed to not have those functions.

The server 11, the client 12, and the client 13, as shown in Fig. 6, are interconnected with one another by the network 14. It is assumed that the transfer rate of the network 14 dynamically varies according to the status of the client 12 and the client 13, or the status of the network 14 itself. For example, the transfer rate of the client at rest differs from that on the move, and the speed of the network, which is assigned to each client, changes due to the change of the number of clients who communicate with the server 11 at the same time.

The server 11 and the clients 12 and 13, in addition to being an ordinary computer system, may be other types of information devices formed by a processor which performs computation processing by executing predetermined program code.

Fig. 7 schematically shows the structure of a program stored by the server 11. As shown in Fig. 7, a program 15 according to this embodiment is composed of a plurality of phrases 15-1 and a plurality of annotations 15-2 provided for each phrase.

The phrase 15-1 is such that methods and instances which originally form a program are classified based on specific characteristics. As the characteristics, for example, reference characteristics of methods and instances, such as methods and instances used at the start-up time of a program or methods and instances used when a specific button of the user interface of a program is pressed, can be used. The classification is performed by using profile data obtained by actually executing a program, by using static data obtained by analyzing a program, or by using data given by a program creator.

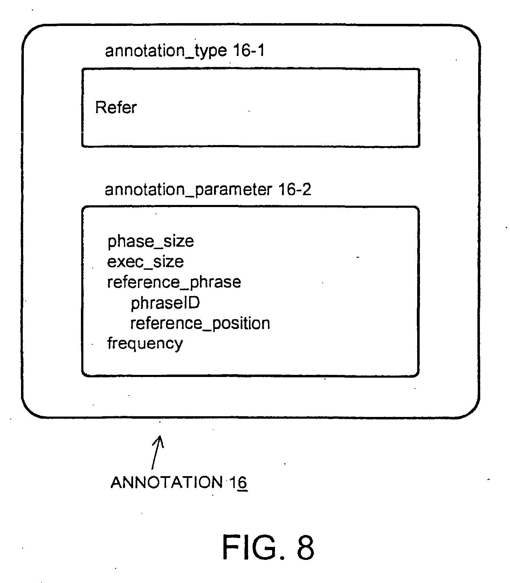

The annotation is made to correspond to a phrase for the purpose of describing the characteristics of the phrase. It is possible to cause a plurality of annotations to correspond to one phrase. Fig. 8 schematically shows an example of the structure of an annotation. In Fig. 8, an annotation 16 is composed of an annotation type 16-1 and an annotation parameter 16-2. The annotation type 16-1 indicates the type of characteristics possessed by the annotation 16, and the annotation parameter 16-2 has the value of that type.

In this embodiment, as annotation types, four types of Refer, Compressed, Invoke, and Map are used. Refer indicates the reference relationship between phrases. Compressed indicates the compression of a phrase. Invoke indicates that the phrase is a portion which is referred to at the start of the program execution. Map indicates that control information of the phrase at the download destination is contained. All the annotations of these types are not made to correspond to the phrase, and only the necessary annotations are made to correspond thereto according to the characteristics of the phrase.

In the example of the structure of the annotation shown in Fig. 8, as the annotation type, Refer indicating the reference relationship between phrases is specified, and as annotation parameters indicating the values of that type, phrase_size, exec_size, frequency, reference_phrase are provided.

Phrase_size indicates the size of the corresponding phrase. Exec_size indicates the number of commands of the phrase. This number of commands is not the number of commands contained in the phrase, but is a typical number of commands when the phrase is referred to at first. If there is a loop in the command, the number of commands required for the typical iteration count for the loop is converted into the number of commands and is shown, and if there are a wait for an I/O (input/output) and a wait for an input by the user, these are also converted into the number of commands and are shown. Frequency indicates the frequency at which this phrase is referred to. Reference_phrase indicates information on another phrase which is referred to by this phrase, and this exists in a number corresponding to the number of phrases to be referred to. However, there is no need to have reference_phrases about all the phrases which may be referred to, and reference_phrase may not exist for a reference with a low frequency of reference to reference_phrase when this phrase is referred to at first.

Reference_phrase has therein PhraseID and reference_position. PhraseID is identification information (ID) for identifying a phrase, and the corresponding phrase is determined for each program. Reference_position is described such that the number of commands between references of reference_phrase is at a relative value from the execution start of this phrase. Similarly to exec_size, the number of commands of reference_position is also a typical number of commands up to the reference of reference_phrase when the phrase is referred to at first. If there is a loop in the command, the number of commands required for the typical iteration count for the loop is also converted into the number of commands and is shown, and if there are a wait for an I/O and a wait for an input by the user, these are also converted into the number of commands and are shown.

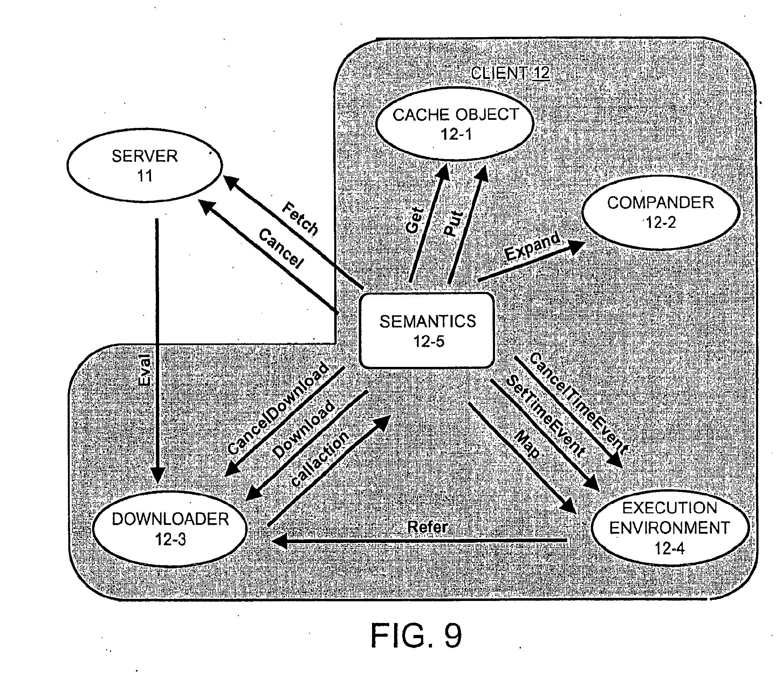

Fig. 9 schematically shows the function structure of the client 12 shown in Fig. 6. The client 12 performs download execution of a program by exchanging a message with the server 11. As has already been described, the client 12 includes the cache 12-1 for temporarily storing a downloaded program and the compander 12-2 for expanding the compressed data.

In this embodiment, it is assumed that the client 12 is formed in the form of a parallel object. The "parallel object" referred to herein is formed of a plurality of methods which are externally published, a memory for storing the status of an object and the method main body, and a message queue for managing a single context for executing a method and messages which are not yet processed. The parallel object receives a message for the published method and processes one message at a time. The message received while the message is being processed is stored in the message queue.

The client 12 includes individual parallel objects of a downloader (Downloader) 12-3 for managing the downloading of a program from the server 11 via the network 14, an execution environment (ExecSpace) 12-4 for the downloaded program, a cache object (CacheObject) 12-1 for managing the temporary storage of the downloaded program, and a compander (Expander) 12-2 for managing the expanding process of compressed data.

The execution environment 12-4, in practice, is not a parallel object, but is an operating system (OS) for providing a program operating environment, or a program execution environment constructed on the operating system. However, in this specification, for the sake of convenience, the execution environment 12-4 will be described as a parallel object in a pseudo-manner. Also, similarly, the execution environment on the server 11 side will be described as a parallel object in a pseudo-manner.

The client 12 includes a cache object 12-1 for managing cache memory and a compander 12-2 for managing the compression and expansion mechanism. In this specification, for the simplicity of description, the functions of a plurality of start-ups of the same program and the program version management are not provided.

Semantics 12-5 is not a parallel object, but is a table which is referred to by the downloader 12-3. In this embodiment, the semantics 12-5 is formed in such a manner as to be separated from the downloader 12-3, so that the behavior, that is, the operating characteristics, of the downloader 12-3 can easily be changed by only rewriting the semantics 12-5.

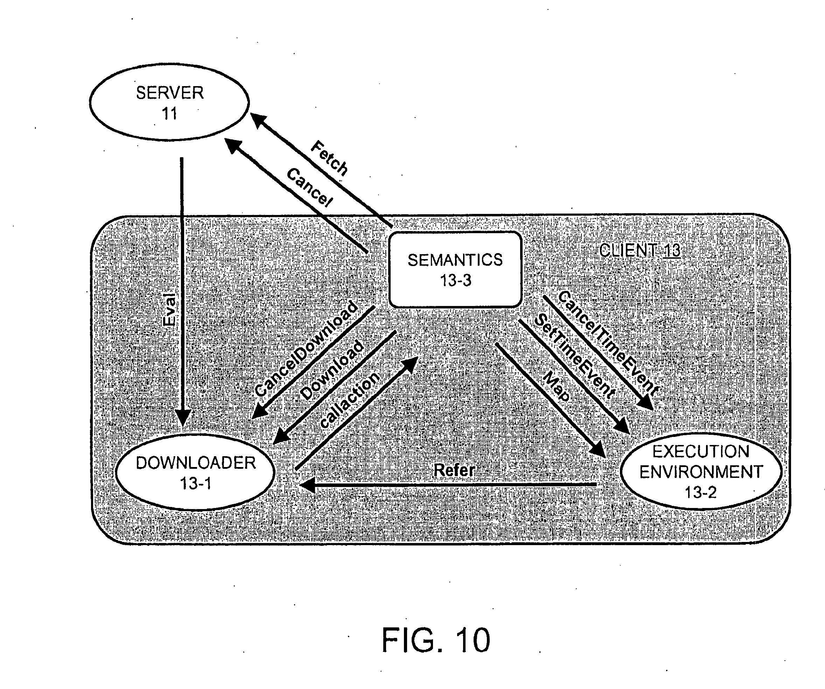

Fig. 10 schematically shows the function structure of the client 13 shown in Fig. 6. As shown in Fig. 10, the client 13 includes individual parallel objects of a downloader (Downloader) 13-1 for managing the download of a program from the server via the network, and an execution environment (ExecSpace) 13-2 for the downloaded program.

Semantics 13-3 is not a parallel object, but is a table which is referred to by the downloader 13-1. The semantics 12-5 is formed in such a manner as to be separated from the downloader 13-1, so that the behavior, that is, the operating characteristics, of the downloader 13-1 can easily be changed by only rewriting the semantics 13-3.

In the following, each of the objects which form the client 12 or 13 will be described.

Execution Environment (ExecSpace):

The execution environment is a program for executing a program and for providing various services, and in practice, is formed of various objects and modules. In this specification, for the sake of description, these will be handled as one object by combining them.

The execution environment has two methods regarding the download execution function. In practice, the execution environment has many methods and services in addition to those to be described below. However, since these are not directly related to the download execution, that is, the gist of the present invention, descriptions thereof axe omitted. In practice, the operating system (OS) and a virtual machine (VM) correspond to the execution environment referred to herein.

In this embodiment, the execution environment allow three types of methods of Map, SetTimeEvent, and CancelTimeEvent to operate.

The Map method sets a program portion specified by the argument so that the program can be used. Specifically, operations, such as allocation of the program into the memory space, or registration thereof, are performed.

In the Map method, when an ID is specified by an argument, the execution of the corresponding program is restarted. The giving of meaning of the ID is performed by the execution environment. For the ID to be specified in the Resume, the ID specified when the execution environment issues Refer is specified as is. In this embodiment, the execution environment specifies a thread ID when Refer is issued. For this reason, when the Resume method is to be executed, the execution of the thread corresponding to the thread ID is restarted.

SetTimeEvent sends, to an entry specified by the argument, a message using the argument specified by the argument at the time specified by the argument. Furthermore, SetTimeEvent returns an event ID.

CancelTimeEvent cancels the event of the event ID specified by the argument.

Server:

The server is an object that operates in a host, differing from the client, connected via a network. The server manages programs to be downloaded by the client and downloads a program to the client in response to a request.

In this embodiment, the server issues messages of Fetch and Cancel.

The Fetch method receives a request for downloading a phrase corresponding to the phrase ID specified by the argument or a type in which the annotation is specified by the argument. The completion of the download is reported by issuing an Eval message to the downloader object.

The Cancel method cancels the download process corresponding to the PhraseID specified by the argument and the type. When the cancellation is performed, an Eval message indicating the completion of the download request is not issued.

Cache Object:

A cache object is an object for speeding up download execution by storing phrases and annotations in a cache memory and by extracting them as necessary. The cache object is an object used in a case where the client device is able to use a cache memory.

In this embodiment, the cache object operates two types of methods of Get and Put.

The Get method checks if the phrase or the annotation corresponding to the phrase ID specified by the argument is stored in the cache memory. If the phrase or the annotation is stored in the cache memory, the contents thereof are returned. Furthermore, a status code indicating whether the phrase is stored in the cache memory is returned. Furthermore, a status code indicating whether the annotation is stored in the cache memory is returned.

The Put method checks whether or not an area for storing the phrase or the annotation specified by the argument exists in the cache memory. If there is no area in the cache memory, the phrase or annotation which is determined to be unnecessary by an appropriate algorithm (for example, LRU (Least Recently Used) logic, etc.) is deleted until the area can be allocated. Then, the specified phrase or annotation is stored in the cache memory in such a manner as to be associated with the phrase ID specified by the argument.

Compander (Expander):

A compander is an object having an expansion function for use with a plurality of compression methods. This object is optionally added for the purpose of speeding up download execution when the client has a CPU (Central Processing Unit) performance which is sufficient for the client to perform expansion and hardware for an expansion process.

In this embodiment, the compander operates an Expand method. In the Expand method, by using an expansion algorithm specified by the argument, the contents specified by the argument are expanded, and the contents are returned.

Downloader (Downloader):

The downloader realizes download execution and achieves a higher speed by solving an execution request and reference from the operating system and by performing a prefetch to a server object. In this embodiment, a portion of the downloader is separated as semantics, so that compliance with a different client device is made easier (described above). Here, the primary portion of the downloader, which does not contain semantics, will be described.

The downloader has therein a phrase table (PhraseTable), a phrase map (PhraseMap), a request queue (RequestQueue), a current execution speed (CurrentExecSpeed), and a current bandwidth (CurrentBandwidth). Firstly, these will be described.

Phrase Table (PhraseTable):

The phrase table is a table for managing phrases. The phrase table has entries corresponding to phrase IDs, and each entry is composed of members of a phrase status (phrase_status), an annotation status (annotation_status), a registered ID (registeredID), and a reference time (reference_time).

In the phrase status (phrase_status) and the annotation status (annotation_status), the values indicating the downloaded status of the phrase and the annotation are written, respectively. The values which can be taken include "nothing", "requested", and "loaded".

The registered ID (registeredID) indicates whether or not the phrase corresponding to this entry is referred to by the Refer method. When the phrase is referred to by Refer, the ID specified at that time is registered.

The reference time (reference_time) stores the time at which the phrase corresponding to this entry is referred to. When it is necessary at the earliest possible time, the value indicating that is stored.

The phrase table is generated at the execution time on the basis of the data obtained from the server object.

Phrase Map (PhraseMap):

The phrase map is data for managing the corresponding relationship between addresses and phrase IDs. Use of this data makes it possible to convert an address into a phrase ID. The phrase map is generated at the execution time on the basis of the data obtained from the server object.

Request Queue (RequestQueue):

The request queue is a queue for managing a download request to the server object. When a request is issued, the reference time and the priority are specified. As the priority, a value of either high or low is specified. In the case of high, the request is placed at the top of the queue in the order in which the request is generated regardless of the reference time. When the priority is low, the requests are sorted on the basis of the reference time, and the earlier the reference time is, the higher the request is placed. The download request to the server object is made in sequence from the top of this request queue.

Current Execution Speed (CurrentExecSeed):

The current execution speed (CurrentExecSeed) indicates the current average number of commands executed by the CPU per unit time.

Current Time (CurrentTime):

The current time (CurrentTime) indicates the current time by setting the time at which the Refer method is generated as an origin.

Current Bandwidth (CurrentBandwidth):

The current bandwidth (CurrentBandwidth) indicates the current average download speed of the network.
Next, the description turns to the method in which the downloader operates. In this embodiment, the downloader operates individual methods of Refer, Eval, Download, and CancelDownload.

Refer:

In the Refer method, the address specified by the argument or the program name is converted into a phrase ID. In the case of the program name, conversion into a predetermined phrase ID is performed. In the case of the address, the conversion is performed using a conversion data phrase map from the address into the phrase ID. Furthermore, by specifying the phrase ID and the priority "high", the Eval method of the downloader is called.

Eval:

In the Eval method, an entry of the phrase table corresponding to the phrase ID specified by the argument is obtained. When the annotation is specified by the argument, the annotation status (annotation_status), which is a member of the corresponding entry of the phrase table, is updated to "loaded". Furthermore, when the phrase is specified by the argument, the phrase status (phrase_status), which is a member of the corresponding entry of the phrase table, is updated to "loaded".
In the table below, the relationship between entries corresponding to the annotation status and the phrase status are summarized.

[Table 1]

| Annotation_status | Phrase_status | Entry |
|---|---|---|
| other | other | ReferEntry |
| other | loaded | PhraseLoadedEntry |
| loaded | other | AnnotationLoadedEntry |
| loaded | loaded | LoadedCompleteEntry |

In this table, when an operation (Action) corresponding to a plurality of annotation types (annotation_type) of the annotation specified by the argument exists in the entry, the phrase ID, the annotation, and the phrase are specified as the arguments in order to call an operation (Action) in the sequence in the corresponding entry. When the annotation status (annotation_status) is "other", all the operations (Action) in the corresponding entry are called in the sequence described in the entry.
As long as there is a vacancy in the download channel, the following operation is repeated: one request is extracted from the top of the request queue, the annotation or the phrase is specified in the phrase ID and the time with respect to the server object, and the Fetch message (described above) is issued.

Download:

In the Download method, depending on whether the type specified by the argument is which one of the annotation and the phrase, the annotation status (annotation_status) or the phrase status (pharse_status) of the entry of the phrase table corresponding to the phrase ID specified by the argument is set to "requested". In accordance with the annotation or the phrase of the type specified by the argument and the priority specified by the argument or the reference time (reference_time), the request is enqueued in the request queue. As long as there is a vacancy in the download channel, the following operation is repeated: one request is extracted from the top of the request queue, the annotation or the phrase is specified in the phrase ID and the type with respect to the server object, and the Fetch (described above) message is issued by adding client information containing the information on whether or not a compander (Expander) can be used.

CancelDownload:

In the CancelDownload method, all the requests whose priority is specified as low are deleted from the request queue. For the request whose priority is specified as low among the requests which are currently being downloaded, the phrase ID and the type are specified with respect to the server object, and the Cancel message (described above) is issued. Furthermore, the CancelTimeEvent method (described above) is issued to the event in which SetTimeEvent (described above) has been performed. Furthermore, the current time (CurrentTime) is invalidated (invalid). Furthermore, the annotation status (annotation_status) and the phrase status (phrase_status) of the entry corresponding to each request, which is deleted in the phrase table, are set to "nothing".

Semantics (Semantics):

Semantics is not an object, but is a table which is referred to by the above-described downloader. In this embodiment, the semantics is formed in such a manner as to be separated from the downloader, so that the behavior of the downloader can easily be changed according to the specification of the client.
The semantics has entries corresponding to the downloaded status of the phrase and the annotation, and the annotation type (annotation_type) of the annotation. The entry is formed of a list of actions. The action is called by the downloader when an annotation having the corresponding annotation type exists. The calling is performed in the sequence specified in the list. When the annotation is not downloaded, all the actions of the list are called in that sequence.
Table 2 below shows the semantics of the client 2, and Table 3 below shows the semantics of the client 13. In each table, items within the parenthesis of the action column indicate the corresponding annotation type. Since the client 12 has a cache and a companding function, actions for them are added in comparison with the client 13. Furthermore, the client 13 is replaced with a simple prefetch mechanism implementation when compared to the client 12.

[Table 2]

| Entry | Action |
|---|---|
| ReferLoadedEntry | GetCacheAction, ReferAction |
| PhraseLoadedEntry | NullAction |
| AnnotationLoadedEntry | InitialAction(Invoke), GetListCache Action(Refer), PrefetchAction(Refer) |
| LoadCompleteEntry | StoreCacheAction(Refer), ExpandAction (Compressed), MapAction(Map) |

[Table 3]

| Entry | Action |
|---|---|
| ReferLoadedEntry | ReferAction |
| PhraseLoadedEntry | NullAction |
| AnnotationLoadedEntry | InitialAction(Invoke), SimplePrefetch Action (Refer) |

[Table 3]   (continued)

| Entry | Action |
|---|---|
| LoadCompleteEntry | MapAction(Map) |

The operation of these actions will now be described below.

GetCacheAction:

In the GetCacheAction action, first, the phrase ID specified by the argument is specified in the cache object, and a Get message is issued. If the annotation is stored and the annotation status (annotation_status) is "nothing", the annotation status of the phrase table entry corresponding to the phrase ID is set to "requested". Next, the annotation and the phrase ID are specified, and an Eval message is issued to the downloader. If the phrase is stored and the phrase status (phrase_status) is "nothing", the phrase status of the phrase table entry corresponding to the phrase ID is set to "requested". Next, the phrase and the phrase ID are specified, and an Eval message is issued to the downloader.

ReferAction:

In the ReferAction action, first, the entry of the phrase table corresponding to the phrase ID specified by the argument is checked. If either the annotation status (annotation_status) or the phrase status (phrase_status) is "nothing", the CancelDownload method of the downloader is called. Then, the priority specified by the argument or the value indicating the reference time is set in the reference time (reference_time) of the entry of the phrase table. If the annotation status is "nothing", the priority specified by the argument or the reference time, the annotation type, and the phrase ID are specified, and the Download message is issued to the downloader.

NullAction:

When the NullAction action is called, no action is taken.

InitialAction:

In the InitialAction action, by using the annotation specified by the argument, a phrase table is created and a phrase map is generated.

GetListCacheAction:

In the GetListCacheAction action, first, a list of a plurality of phrase IDs contained in a reference phrase (ReferencePhrase) of the annotation specified by the argument is obtained. Then, the entries of the phrase table corresponding to each phrase ID of the obtained list are checked, and phrase IDs whose phrase status (phrase_status) is other than "nothing" are excluded from the list. Then, the following processes are performed on all the phrases in the list.

(a) By using the value of the reference time (reference time) of the phrase table corresponding to the phrase ID specified by the argument and the reference position (reference position) of each reference phrase (reference phrase), the reference time of each reference phrase is calculated, and it is set in the corresponding entry of the phrase table.
(b) The phrase ID is specified, and GetCacheAction (described above) is performed.

PrefetchAction:

In PrefetchAction, first, by using the values of the phrase size (phrase_size) and the current bandwidth (CurrentBandwidth) of the annotation specified by the argument, the download time (download_time) of the phrase is calculated by the following equation:

$$download\_time = phrase\_size \times CurrentBandwidth$$

Next, by using the value of the reference time (reference_time) of the phrase table corresponding to the phrase ID specified by the argument, the start time (start_time) is calculated by the following equation:

start_time = reference_time - download_time

If CurrentTime ≥ start_time (that is, the current time has passed the start time), the priority "low", the phrase type, the phrase ID, and the start time are specified, and a Download message is issued to the downloader. Otherwise, by specifying the start time and the Download of the downloader as entries, a SetTimeEvent message is sent to the execution environment (ExecSpace). As arguments for Download, the phrase ID, the phrase type, the priority "low", and the start time are specified.

Next, a list of a plurality of phrase IDs contained in the reference phrase (reference_phrase) of the annotation specified by the argument is obtained. The entries of the phrase table corresponding to each phrase ID of the obtained list are checked, and phrase IDs whose annotation status (annotation_status) is other than "nothing" are excluded from the list. Then, the following processes are performed on all the phrases in the list.

(a) By using the value of the reference time (reference_time) of the phrase table entry corresponding to the phrase ID specified by the argument, the reference position (reference_position) of each reference phrase (reference_phrase), and the current execution speed (CurrentExecSpeed), the reference time of each reference phrase is calculated by the equation: reference_time × reference_position × CurrentExecSpeed, and this is set in the corresponding entry of the phrase table.

(b) The priority "low", the annotation type, the phrase ID, and the reference time are specified, and a Download message is issued to the downloader.

SimplePrefetchAction:

In SimplePrefetchAction, first, the phrase ID specified by the argument, the priority "low", the phrase type, the phrase ID, and the reference time are specified, and a Download message is issued to the downloader. Next, a list of a plurality of phrase IDs contained in the reference phrase (reference_phrase) of the annotation specified by the argument is obtained. Then, the entries of the phrase table corresponding to each phrase ID of the obtained list are checked, and phrase IDs whose annotation status (annotation_status) is other than "nothing" are excluded from the list. Then, the following processes are performed on all the phrases in the list.

(a) By using the value of the reference time (reference_time) of the phrase table corresponding to the phrase ID specified by the argument, the reference position (reference_position) of each reference phrase (reference_phrase), and the current execution speed (CurrentExecSpeed), the reference time of each reference phrase is calculated by the equation: reference_time + reference_position × CurrentExecSpeed, and it is set in the corresponding entry of the phrase table.

(b) The priority "low", the annotation type, the phrase ID, and the reference time are specified, and a Download message is issued to the downloader.

StoreCacheAction:

In StoreCacheAction, based on the annotation specified by the argument, it is determined whether the phrase should be stored in the cache memory. When the phrase should be stored, the phrase ID, and the annotation or the phrase are specified, and a Put message (Put) is issued to the cache object.

ExpandAction:

In ExpandAction, by using an expansion method and parameters specified in the annotation specified by the argument, the phrase specified by the argument is expanded, and the expanded phrase is returned.

MapAction:

In MapAction, based on the information of the annotation specified by the argument, a Map message is issued to the execution environment (ExecSpace). At this time, if the ID is set in the phrase table entry corresponding to the phrase ID specified by the argument, this ID is added to the Map message. Then, if this ID is set in the phrase table entry corresponding to the phrase ID specified by the argument, the current time (CurrentTime) is set.

Next, the operation for starting a program between the client and the server according to this embodiment will be described.

Start-up Scenario 1:

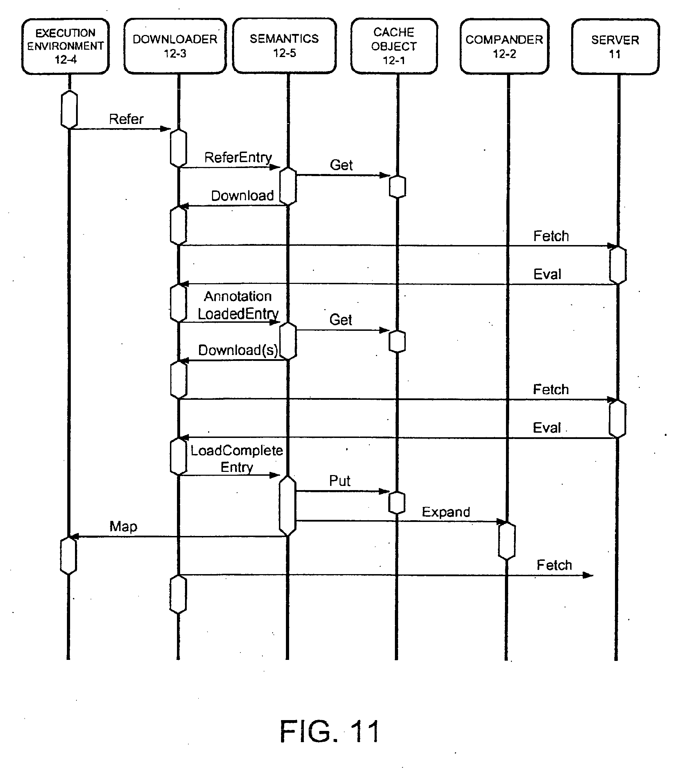

Initially, the scenario of starting a program of the client 12 having a cache and an companding function will be described. Fig. 11 shows the processing flow when the execution environment (ExecSpace) 12-4 of the client 12 issues a program starting request.

Upon receiving the program starting request from the user, the execution environment 12-4 specifies the program name and the thread ID for executing it, and issues a Refer message to the downloader 12-3.

The downloader 12-3 specifies the program name and the phrase ID indicating the start of program execution in order to call Eval of the downloader 12-3.

As a result of the execution of Eval, since both the annotation status and the phrase status are "other", a ReferEntry action of the semantics 12-5 is called (see Table 1). As a result, first, GetCacheAction is called (see Table 2) .

In GetCacheAction, the phrase ID is specified, and a Get message is sent to the cache object. As a result, if the annotation or the phrase is stored in the cache (cache hit), it is extracted. If the annotation or the phrase is not stored (cache mishit), since PhraseMap is not updated, ReferAction is performed next (see Table 2).

In ReferAction, CancelDownload of the downloader 12-3 is called to cancel the Prefetch action up to this point. In the start-up scenario shown in Fig. 11, since it is the first start-up of the program, there is nothing to be cancelled.

Next, by specifying the priority as high, a Download message of the annotation is issued to the downloader 12-3.

Upon receiving the Download message, the downloader 12-3 places it in the request queue, next, extracts the element at the top thereof, and issues this element as a Fetch message to the server 11. In the scenario shown in Fig. 11, the request placed in the queue earlier is made as is to the server 11. At this time, the information on the client 12 is also passed as an argument. In this example, the fact that the client 12 has a companding function and the type thereof are specified as arguments.

Upon receiving the Fetch message, the server 11 searches for the specified phrase ID of the specified program. At this time, when the fact that the companding function is present is specified, it is checked whether a compressed phrase exists, and if the compressed phrase exists, it is selected. If the compressed phrase does not exist, a non-compressed phrase is selected. In the start-up scenario shown in Fig. 11, since the annotation is requested, the server 11 issues the corresponding annotation as an Eval message to the downloader 12-3.

Upon receiving the Eval message, the downloader 12-3 performs actions in the AnnotationLoadedEntry in sequence according to the type possessed by the annotation on the basis of the fact that the annotation status (annotation_status) and the phrase status (phrase_status) are "loaded" and "other", respectively (see Tables 1 and 2). In the start-up scenario shown in Fig. 11, four types of annotations of Invoke, Refer, Compressed, and Map are obtained. Since there are three actions corresponding to Invoke and Refer in AnnotationLoadedEntry (see Table 2), these are called in sequence.

Initially, InitialAction allows a phrase table and a phrase map to be formed inside the downloader 12-3 by using an Invoke-type annotation.

Next, GetCacheListAction is performed using a Refer-type annotation. If there is a phrase stored inside the cache object 12-1, it is sent as an Eval message to the downloader 12-3.

Finally, PrefetchAction is performed again using a Refer-type annotation. In PrefetchAction, first, a calculation is performed as to when the phrase corresponding to the annotation should be begun to be downloaded in order to be in time for reference, and it is compared with the current time. If the download start time has been passed, a prefetch request is made by immediately sending a Download message to the downloader 12-3. If the download start time has not been passed, by using a SetTimeEvent message, it is set that the Download message of the downloader 2-3 is called at the download start time. In the start-up scenario shown in Fig. 11, assuming that the download start time has been passed, a Download message is sent to the downloader 12-3.

Next, the term of the reference phrase (reference_phrase) of the annotation is checked, a request for prefetching an annotation of the phrase for which a reference occurs is generated, and this is also sent as a Download message for the downloader 12-3.

By automatically prefetching a phrase in accordance with the download start time in the manner described above, the concurrentness between the execution of the program and the download thereof, and a higher speed of the download can be realized.

Upon receiving the Download message, the downloader 12-3 places it in the request queue, next, extracts the element at the top thereof, and issues it as a Fetch message to the server 11. In the start-up scenario shown in Fig. 11, the request placed earlier in the queue is made as is to the server 11. At this time, the information of the client 12 is also passed as an argument. In this example, the fact that the client 12 has a companding function and the type thereof are specified as arguments.

Upon receiving the Fetch message, the server 11 searches for the specified phrase ID of the specified program. At this time, when the fact that the companding function is present is specified, it is checked whether a compressed phrase exists, and if the compressed phrase exists, it is selected. If the compressed phrase does not exist, a non-compressed phrase is selected. Here, since the phrase is requested, the server 11 issues the compressed phrase as an Eval message to the downloader 12-3.

Upon receiving the Eval message, the downloader 12-3 performs actions in the LoadCompleteEntry in sequence according to the type possessed by the annotation on the basis of the fact that both the annotation status (annotation_status) and the phrase status (phrase_status) are "loaded" (see Tables 1 and 2). In the start-up scenario shown in Fig. 11, four types of annotations of Invoke, Refer, Compressed, and Map are already obtained. Since there are three actions corresponding to Refer, Compressed, and Map in LoadCompleteEntry, these are called in sequence (see Table 2).

Initially, StoreCacheAction is performed using a Refer-type annotation. StoreCacheAction determines whether or not the phrase should be stored in the cache by using the frequency information of the annotation. When the phrase should be stored, a Put message is issued to the cache object 12-1.

Next, ExpandAction is performed using a Compressed-type annotation. In ExpandAction, an Expand message is sent to the compander 12-2 by using the information of the annotation, the contents of the phrase are expanded into the original contents, and these are returned.

Finally, MapAction is performed using a Map-type annotation. In MapAction, the execution environment (ExecSpace) 12-4 obtains information required to use the phrase from the annotation and sends it as a Map message to the execution environment 12-4, so that a program that operates in the execution environment 12-4 can use the phrase. Furthermore, in the start-up scenario shown in Fig. 11, since the ID is specified at Refer time, it is also specified in the Map message at the same time. By using this ID, the execution environment 12-4 causes a thread to be begun to be executed on the program.

At the end of the execution of Eval, when there is a message in the request queue and a download request can be made, a Fetch message is issued to the server 11. In the start-up scenario shown in Fig. 11, since a request for prefetching the annotation is placed in the request queue, this is sent to the server 11, whereby a prefetch process is performed. This prefetch of the annotation is performed beforehand for the phrase next to the prefetched phrase, making it possible to realize a higher-speed download and concurrentness.

As a result, the download execution of the program becomes possible by using prefetch, cache, and compression.

Start-up Scenario 2:

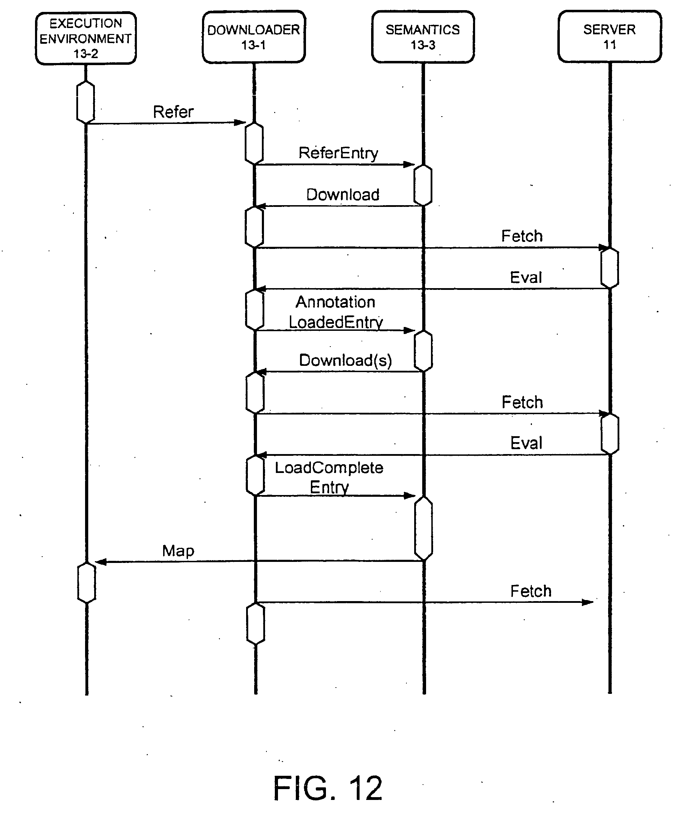

Next, the description turns to the scenario of starting a program in the client 13 who does not have a cache or a companding function. Fig. 12 shows the processing flow when the execution environment (ExecSpace) 13-2 of the client 13 issues a program starting request.

Upon receiving the program starting request from the user, the execution environment 13-2 specifies the program name and the thread ID for executing it, and issues a Refer message to the downloader 13-1.

The downloader 13-1 specifies the program name and the phrase ID indicating the start of the execution of the program, and calls Eval of the downloader 13-1.

As a result of the execution of Eval, since both the annotation status and the phrase status are "other", the action of ReferEntry of the semantics 13-3 is called (see Table 1). As a result, ReferAction is performed (see Table 3).

In ReferAction, the CancelDownload method of the downloader 13-1 is called to cancel the prefetch action up to this point. In the start-up scenario shown in Fig. 12, since it is the first start-up of the program, there is nothing to be cancelled. Next, the priority is specified as high, and a Download message of the annotation is issued.

Upon receiving the Download message, the downloader 13-1 places it in the request queue, next, extracts the element at the top thereof, and issues this as a Fetch message to the server object 11.

In the start-up scenario shown in Fig. 12, the request placed earlier in the queue is made as is to the server object 11. At this time, the information on the client 13 is also passed as an argument. In this embodiment, the fact that the client 13 does not have a companding function is specified as an argument.

Upon receiving the Fetch message, the server object 11 searches for the specified phrase ID of the specified program. At this time, when the fact that the companding function is present is specified, it is checked whether a compressed phrase exists, and if the compressed phrase exists, it is selected. If the compressed phrase does not exist, a non-compressed phrase is selected. Here, since the annotation is requested, the server object 11 issues the corresponding annotation as an Eval message to the downloader 13-1.

Upon receiving the Eval message, since the annotation status (annotation_status) and the phrase status (phrase_status) are "loaded" and "other", respectively, the downloader 13-1 performs actions in AnnotationLoadedEntry in sequence according to the type possessed by the annotation (see Table 1). In the start-up scenario shown in Fig. 12, three types of annotation of Invoke, Refer, and, Map are obtained. Since there are two actions corresponding to Invoke and Refer in AnnotationLoadedEntry (see Table 3), these are called in sequence. First, InitialAction allows a phrase table and a phrase map to be formed within the downloader 3-1 by using an Invoke-type annotation. Next, by using a Refer-type annotation, SimplePrefetchAction is performed.

In SimplePrefetchAction, first, by immediately sending a Download message to the downloader 13-1, a request for prefetching the phrase corresponding to the annotation is made. Next, the item of the reference phrase (reference_phrase) of the annotation is checked, a request for prefetching the annotation of the phrase for which reference occurs is made, and this is also sent as a Download message for the downloader 13-1.

Upon receiving the Download message, the downloader 13-1 places it in the request queue, next, extracts the element at the top thereof, and issues this as a Fetch message to the server object 11. In the start-up scenario shown in Fig. 12, the request placed earlier in the queue is made as is to the server object 11. At this time, the information on the client is also passed as an argument. Here, the fact that the client 13 does not have a companding function is specified as an argument.

Upon receiving the Fetch message, the server object 11 searches for the specified phrase ID of the specified program. At this time, when the fact that the companding function is present is specified, it is checked whether a compressed phrase exists, and if the compressed phrase exists, it is selected. If the compressed phrase does not exist, the non-compressed phrase is selected. Here, since the phrase is requested, the server object 11 issues a non-compressed phrase as an Eval message to the downloader 13-1.

Upon receiving the Eval message, since both the annotation status (annotation_status) and the phrase status (phrase_status) are "loaded", the downloader 13-1 performs actions in LoadCompleteEntry in sequence according to the type possessed by the annotation (see Table 1). In the start-up scenario shown in Fig. 12, three types of annotation of Invoke, Refer, and, Map are already obtained, but in LoadCompleteEntry, only one action corresponding to Map exists. By using a Map-type annotation, MapAction is performed (see Table 3).

In MapAction, information required for the execution environment (ExecSpace) 13-2 to use a phrase is obtained from the annotation, and it is sent as a Map message to the execution environment 13-2, so that the program operating in the execution environment 13-2 can use the phrase. Furthermore, in the start-up scenario shown in Fig. 12, since the ID is specified at Refer time, it is also specified in the Map message at the same time. Using this ID, the execution environment 13-2 causes the thread to be begun to be executed on the program.

At the end of the execution of Eval, when there is a message in the request queue and a download request is possible, a Fetch message is issued to the server object 11. In the start-up scenario shown in Fig. 12, since the annotation prefetching request is placed in the request queue, this is sent to the server object 11, whereby a prefetch process is performed.

As a result, program download execution becomes possible by using a simple prefetch.

Further Information

In the foregoing, the present invention has been described in detail while referring to the specific embodiments. However, it is self-explanatory that persons skilled in the art can modify or replace the embodiments without departing from the spirit and the scope of the invention. That is, the present invention has been disclosed in the form of examples, and should not be construed as being limited thereto. In order to define the gist of the present invention, the Claim section as set forth at the beginning of the Description should be referred to.

[Industrial Applicability]

According to the present invention, it is possible to provide a superior data processing system and a superior data processing method, which are capable of reducing a download execution delay by flexibly coping with the performance and the functions of client devices and the variety of transfer rates between a module management apparatus and client devices, a superior information processing apparatus and a superior information processing method for use therewith, and a storage medium therefor.

According to the present invention, it is possible to provide a superior data processing system and a superior data processing method, which are capable of reducing a download execution delay by flexibly coping with the performance and the functions of client devices and the variety of transfer rates of a network, a superior information processing apparatus and a superior information. processing method for use therewith, and a storage medium therefor.

According to the present invention, by forming a program by phrases, portions which are unnecessary for the execution of the program can be classified, and only the program portion necessary for the execution of the program can be downloaded. Furthermore, by causing an annotation to correspond to a phrase, a higher speed of download execution, in which uses of a plurality of techniques such as prefetch and cache are flexibly combined in their most suitable form according to various configurations of client devices with respect to the same program, can be achieved.

According to the present invention, on the server side, by considering the reference relationship during program execution and the download efficiency, the original program is classified and reconfigured into phrases. Then, an annotation, as information indicating the characteristics of each phrase, is made to correspond to that phrase. On the client side, by using the information of the annotation, the speed of download execution can be increased by flexibly combining a prefetch technique, which is suitable for devices of the client, and techniques such as cache and compression.

**Claims**

1. A data processing system comprising a module management apparatus for managing modules and a client who transfers a module from the module management apparatus and uses the module,

wherein, in said module management apparatus, basic constituent elements of a module are classified based on individual characteristics, the module is reconfigured by new constituent elements composed of a plurality of basic constituent elements, corresponding characteristics are described as characteristic information in the individual basic constituent elements, and the new constituent elements which are reconfigured in response to a request from said client and the characteristic information thereof are transmitted, and

in said client, when the module is transferred from said module management apparatus and is used, a process corresponding to the characteristic information associated with the new constituent elements is performed transparently to the use of the module.

2. A data processing system according to Claim 1, wherein said module management apparatus is a server which is interconnected to clients via a network.

3. A data processing system according to Claim 1, wherein said module management apparatus is a peripheral device which is interconnected via a bus to clients within a predetermined device.

4. A data processing system according to Claim 1, wherein said module is a computer program which is written in a computer-readable format.

5. A data processing system according to Claim 1, wherein said module is data which can be disassembled into basic constituent elements.

6. A data processing system according to Claim 1, wherein, in said module management apparatus, each basic constituent element is compressed using one or more compression methods and the information thereof is described in the corresponding characteristic information, and a new constituent element compressed by a compression method corresponding to an expansion method possessed by said client is transmitted when the report of the compression method is received.

7. A data processing system according to Claim 1, wherein, in said module management apparatus, the new constituent elements contained in the module are individually compressed, and when the report of a plurality of compression methods is received from said client, the new constituent elements compressed by the most suitable method among the methods are transmitted.

8. A data processing method for transferring a module managed in a module management apparatus to a client and for using the module, said data processing method comprising:

a step in which, in said module management apparatus, basic constituent elements of a module are classified based on individual characteristics, the module is reconfigured based on new constituent elements composed of a plurality of basic constituent elements, corresponding characteristics are described as characteristic information in the individual basic constituent elements, and the new constituent elements which are reconfigured in response to a request from said client and the characteristic information thereof are transmitted; and
a step in which, in said client, when the module is transferred from said module management apparatus and is used, a process corresponding to the characteristic information associated with the new constituent elements is performed transparently to the use of the module.

9. A data processing method according to Claim 8, wherein said module management apparatus is a server which is interconnected to clients via a network.

10. A data processing method according to Claim 8, wherein said module management apparatus is a peripheral device which is interconnected via a bus to clients within a predetermined device.

**11.** A data processing method according to Claim 8, wherein said module is a computer program which is written in a computer-readable format.

**12.** A data processing method according to Claim 8, wherein said module is data which can be disassembled into basic constituent elements.

**13.** A data processing method according to Claim 8, wherein, in said module management apparatus, each new constituent element is compressed using one or more compression methods and the information thereof is described in the corresponding characteristic information, and a new constituent element compressed by a compression method corresponding to an expansion method possessed by said client is transmitted when the report of the compression method is received.

**14.** A data processing method according to Claim 8, wherein, in said module management apparatus, the new constituent elements contained in the module are individually compressed, and when the report of a plurality of expansion methods is received from said client, the new constituent elements compressed by the most suitable method among the methods are transmitted.

**15.** An information processing apparatus for providing a module to an external device, said information processing apparatus comprising:

module reconfiguring means for classifying the basic constituent elements of a module on the basis of individual characteristics and reconfiguring the module by the new constituent elements composed of a plurality of basic constituent elements;
characteristic information describing means for describing corresponding characteristics as characteristic information in individual new constituent elements; and
information transmission means for transmitting the new reconfigured constituent elements and the characteristic information thereof in response to a request from the external device.

**16.** An information processing apparatus according to Claim 15, wherein said module is a computer program which is written in a computer-readable format.

**17.** An information processing apparatus according to Claim 15, wherein said module is data which can be disassembled into basic constituent elements.

**18.** An information processing apparatus according to Claim 15, wherein said information transmission means first transmits only the new constituent element containing a portion of the module that is used at first by said external device, and thereafter, the transmission is performed in units of the new constituent element as necessary.

**19.** An information processing apparatus according to Claim 15, wherein said module reconfiguring means compresses each new constituent element by using one or more compression methods and describes the information thereof in corresponding characteristic information, and
said information transmission means transmits a new constituent element which is compressed by a compression method corresponding to an expansion method possessed by said external device when the report of the expansion method is received.

**20.** An information processing apparatus according to Claim 19, wherein each new constituent element contained in the module is individually compressed, and when the report of a plurality of compression methods is received from said external device, said information transmission means transmits the new constituent element compressed by the most suitable method among the methods.

**21.** An information processing apparatus for using a module, said information processing apparatus comprising:

data transferring means for transferring a module from an external device; and
module using means for using the module;

wherein the module is reconfigured by new constituent elements, which are classified based on individual characteristics, composed of a plurality of basic constituent elements,

each new constituent element is associated with characteristic information, and

when the module transferred by said data transferring means is to be used by said module using means, a process corresponding to the characteristic information associated with the new constituent element is performed transparently to the use of the module.

**22.** An information processing apparatus according to Claim 21, wherein said module is a computer program which is written in a computer-readable format.

**23.** An information processing apparatus according to Claim 21, wherein said module is data which can be disassembled into basic constituent elements.

**24.** An information processing apparatus according to Claim 21, wherein said data transferring means transfers the characteristic information together with the new constituent element.

**25.** An information processing apparatus according to Claim 21, wherein characteristic information concerning the new transferred constituent element is possessed in advance.

**26.** An information processing apparatus according to Claim 21, wherein, when the module transferred by said data transferring means is to be used by said module using means, a process corresponding to the characteristic information transferred together with the new constituent element and the characteristic information possessed in advance is performed.

**27.** An information processing apparatus according to Claim 21, wherein said data transferring means first transfers only the new constituent element containing a portion of the module that is used at first by said module using means, and thereafter, the transfer is performed in units of the new constituent element as necessary.

**28.** An information processing apparatus according to Claim 21, wherein said data transferring means first transfers only the new constituent element containing a portion of the module that is used at first by said module using means, and thereafter, by referring to the characteristic information, said data transferring means transfers the new constituent element concurrently to the use of the module before the use of the module by said module using means reaches the new constituent element which is not yet transferred.

**29.** An information processing apparatus according to Claim 21, further comprising cache means for temporarily storing the new transferred constituent element,

wherein the new constituent element is selected by using the characteristic information, the new constituent element is transferred by said data transferring means, and the new constituent element is stored in said cache means, and

when said module using means uses the module, the status of said cache means is checked before said data transferring means requests an external device to transfer data, and when the new constituent element of the module has already been stored by said cache means, the new constituent element is used.

**30.** An information processing apparatus according to Claim 21, further comprising expansion means for expanding compressed data by a predetermined expansion method,

wherein said data transferring means reports said expansion method to said external device when a data transfer request is made, and selectively transfers the new constituent element which is compressed by the corresponding compression method, and

said module using means uses the new constituent element which is transferred by said expansion means after the new constituent element is expanded.

**31.** An information processing method according to Claim 30, wherein each new constituent element contained in the module is individually compressed,

said expansion means comprises a plurality of expansion methods, and

said data moving means reports the plurality of expansion methods to said external device when a data transfer request is made, and selectively transfers the new constituent element which is compressed by the most suitable method.

**32.** An information processing method for providing a module to an external device, said information processing method comprising:

a module reconfiguring step of classifying the basic constituent elements of a module on the basis of individual characteristics and reconfiguring the module by new constituent elements composed of a plurality of basic constituent elements;
a characteristic information describing step of describing corresponding characteristics as characteristic information in each new constituent element; and
an information transmission step of transmitting the new reconfigured constituent element and the characteristic information thereof in response to a request from an external device.

33. An information processing method according to Claim 32, wherein said module is a computer program which is written in a computer-readable format.

34. An information processing method according to Claim 32, wherein said module is data which can be disassembled into basic constituent elements.

35. An information processing method according to Claim 32, wherein, in said information transmission step, only the new constituent element containing a portion of the module that is used at first by said external device is transmitted first, and thereafter, the transfer is performed in units of the new constituent element as necessary.

36. An information processing method according to Claim 32, wherein, in said module reconfiguring step, the new constituent element is compressed by using one or more compression methods and the information thereof is described in corresponding characteristic information, and
in said information transmission means step, a new constituent element which is compressed by a compression method corresponding to an expansion method possessed by said external device is transmitted when the report of the expansion method is received.

37. An information processing method according to Claim 36, wherein each new constituent element contained in the module is individually compressed, and
in said information transmission step, when the report of a plurality of expansion methods is received from said external device, the new constituent element compressed by the most suitable method among the methods is transmitted.

38. An information processing method for using a module, said information processing method comprising:

a data transferring step of transferring a module from an external device; and
a module using step of using the module;

wherein the module is reconfigured by new constituent elements, which are classified based on individual characteristics, composed of a plurality of basic constituent elements,
each new constituent element is associated with characteristic information, and
when the module transferred in said data transferring step is to be used in said module using step, a process corresponding to the characteristic information associated with the new constituent element is performed transparently to the use of the module.

39. An information processing method according to Claim 38, wherein said module is a computer program which is written in a computer-readable format.

40. An information processing method according to Claim 38, wherein said module is data which can be disassembled into basic constituent elements.

41. An information processing method according to Claim 38, wherein, in said data transferring step, the characteristic information together with the new constituent element is transferred.

42. An information processing method according to Claim 38, wherein characteristic information concerning the new transferred constituent element is possessed in advance.

43. An information processing method according to Claim 38, wherein, when the module transferred in said data transferring step is to be used in said module using step, a process corresponding to the characteristic information transferred together with the new constituent element and the characteristic information possessed in advance is performed.

**44.** An information processing method according to Claim 38, wherein, in said data transferring step, only the new constituent element containing a portion of the module that is used at first by said module using means is transferred first, and thereafter, the transfer is performed in units of the new constituent element as necessary.

**45.** An information processing method according to Claim 38, wherein, in said data transferring step, only the new constituent element containing a portion of the module that is used at first in said module using step is transferred first, and thereafter, by referring to the characteristic information, the new constituent element is transferred concurrently to the use of the module before the use of the module by said module using means reaches the new constituent element which is not yet transferred.

**46.** An information processing method according to Claim 38, wherein the new constituent element is selected using the characteristic information, and the new constituent element is transferred in said data transferring step and is stored temporarily, and

in a case where the module is to be used in said module using step, when the new constituent element of the module has already been stored before a data transferring request is made in said module transferring step, the new constituent element is used.

**47.** An information processing method according to Claim 38, further comprising an expansion step of expanding compressed data by a predetermined expansion method,

wherein, in said data transferring step, said expansion method is reported to said external device when a data transfer request is made, and the new constituent element which is compressed by the corresponding compression method is selectively transferred, and

in said module using step, the new constituent element which is transferred in said expansion step is used after the new constituent element is expanded.

**48.** An information processing method according to Claim 47, wherein each new constituent element contained in the module is compressed individually,

said expansion step supports a plurality of expansion methods, and

in said data transferring step, the plurality of expansion methods are reported to said external device when a data transfer request is made and the new constituent element which is compressed by the most suitable method is selectively transferred.

**49.** A storage medium having physically stored thereon in a computer-readable format computer software written so as to execute data processing for managing and using a module composed of a plurality of basic constituent elements on a computer system, said computer software comprising:

a step of classifying the basic constituent elements of the module on the basis of individual characteristics in order to reconfigure the module by the new constituent elements composed of a plurality of basic constituent elements, and managing the module by describing corresponding characteristics as characteristic information in individual new constituent elements; and

a step of performing a process corresponding to the characteristic information associated with the new constituent element in such a manner as to be transparent to the use of the module when the module is used.

**50.** A storage medium having physically stored thereon in a computer-readable format computer software written so as to perform a process for providing a module to an external device on a computer system, said computer software comprising:

a module reconfiguring step of classifying basic constituent elements of the module on the basis of individual characteristics in order to reconfigure the module by the new constituent elements composed of a plurality of basic constituent elements;

a characteristic information describing step of describing corresponding characteristics as characteristic information in individual new constituent elements; and

an information transmission step of transmitting the new reconfigured constituent elements and the characteristic information thereof in response to a request from the external device.

**51.** A storage medium having physically stored thereon in a computer-readable format computer software written so as to perform a process for using a module on a computer system, said computer software comprising:

a data transferring step of transferring a module from an external device; and
a module using step of using the module,

wherein the module is reconfigured by new constituent elements, which are classified based on individual characteristics, composed of a plurality of basic constituent elements, and
when the module transferred in said data transferring step is to be used in said module using step, a process corresponding to the characteristic information associated with the new constituent element is performed transparently to the use of the module.

**Amended claims under Art. 19.1 PCT**

**1.** A data processing system comprising a module management apparatus for managing modules and a client who transfers a module from the module management apparatus and uses the module,
wherein, in said module management apparatus, basic constituent elements of a module are classified based on individual characteristics, the module is reconfigured by new constituent elements composed of a plurality of basic constituent elements, corresponding characteristics are described as characteristic information in the individual basic constituent elements, and the new constituent elements which are reconfigured in response to a request from said client and the characteristic information thereof are transmitted, and
in said client, when the module is transferred from said module management apparatus and is used, a process corresponding to the characteristic information associated with the new constituent elements is performed transparently to the use of the module.

**2.** A data processing method for transferring a module managed in a module management apparatus to a client and for using the module, said data processing method comprising:

a step in which, in said module management apparatus, basic constituent elements of a module are classified based on individual characteristics, the module is reconfigured based on new constituent elements composed of a plurality of basic constituent elements, corresponding characteristics are described as characteristic information in the individual basic constituent elements, and the new constituent elements which are reconfigured in response to a request from said client and the characteristic information thereof are transmitted; and
a step in which, in said client, when the module is transferred from said module management apparatus and is used, a process corresponding to the characteristic information associated with the new constituent elements is performed transparently to the use of the module.

**3.** A data processing method according to Claim 2 or system according to claim 1, wherein said module management apparatus is a server which is interconnected to clients via a network.

**4.** A data processing method according to Claim 2 or system according to claim 1, wherein said module management apparatus is a peripheral device which is interconnected via a bus to clients within a predetermined device.

**5.** A data processing system according to claim 1 or method according to Claim 2, wherein, in said module management apparatus, each new constituent element is compressed using one or more compression methods and the information thereof is described in the corresponding characteristic information, and a new constituent element compressed by a compression method corresponding to an expansion method possessed by said client is transmitted when the report of the compression method is received.

**6.** A data processing system according to claim 1 or method according to Claim 2, wherein, in said module management apparatus, the new constituent elements contained in the module are individually compressed, and when the report of a plurality of expansion methods is received from said client, the new constituent elements compressed by the most suitable method among the methods are transmitted.

**7.** An information processing apparatus for providing a module to an external device, said information processing apparatus comprising:

module reconfiguring means for classifying the basic constituent elements of a module on the basis of individual characteristics and reconfiguring the module by the new constituent elements composed of a plurality of basic constituent elements;

characteristic information describing means for describing corresponding characteristics as characteristic information in individual new constituent elements; and

information transmission means for transmitting the new reconfigured constituent elements and the characteristic information thereof in response to a request from the external device.

**8.** An information processing apparatus according to Claim 7, wherein said information transmission means first transmits only the new constituent element containing a portion of the module that is used at first by said external device, and thereafter, the transmission is performed in units of the new constituent element as necessary.

**9.** An information processing apparatus according to Claim 7, wherein said module reconfiguring means compresses each new constituent element by using one or more compression methods and describes the information thereof in corresponding characteristic information, and

said information transmission means transmits a new constituent element which is compressed by a compression method corresponding to an expansion method possessed by said external device when the report of the expansion method is received.

**10.** An information processing apparatus according to Claim 9, wherein each new constituent element contained in the module is individually compressed, and when the report of a plurality of compression methods is received from said external device, said information transmission means transmits the new constituent element compressed by the most suitable method among the methods.

**11.** An information processing apparatus for using a module, said information processing apparatus comprising:

data transferring means for transferring a module from an external device; and
module using means for using the module;

wherein the module is reconfigured by new constituent elements, which are classified based on individual characteristics, composed of a plurality of basic constituent elements,

each new constituent element is associated with characteristic information, and

when the module transferred by said data transferring means is to be used by said module using means, a process corresponding to the characteristic information associated with the new constituent element is performed transparently to the use of the module.

**12.** An information processing apparatus according to Claim 11, further comprising cache means for temporarily storing the new transferred constituent element,

wherein the new constituent element is selected by using the characteristic information, the new constituent element is transferred by said data transferring means, and the new constituent element is stored in said cache means, and

when said module using means uses the module, the status of said cache means is checked before said data transferring means requests an external device to transfer data, and when the new constituent element of the module has already been stored by said cache means, the new constituent element is used.

**13.** An information processing method for providing a module to an external device, said information processing method comprising:

a module reconfiguring step of classifying the basic constituent elements of a module on the basis of individual characteristics and reconfiguring the module by new constituent elements composed of a plurality of basic constituent elements;

a characteristic information describing step of describing corresponding characteristics as characteristic information in each new constituent element; and

an information transmission step of transmitting the new reconfigured constituent element and the characteristic information thereof in response to a request from an external device.

**14.** An information processing method according to Claim 13, wherein, in said information transmission step, only the new constituent element containing a portion of the module that is used at first by said external device is transmitted first, and thereafter, the transfer is performed in units of the new constituent element as necessary.

**15.** An information processing method according to Claim 13, wherein, in said module reconfiguring step, the new constituent element is compressed by using one or more compression methods and the information thereof is described in corresponding characteristic information, and

in said information transmission means step, a new constituent element which is compressed by a compression method corresponding to an expansion method possessed by said external device is transmitted when the report of the expansion method is received.

**16.** An information processing method according to Claim 15, wherein each new constituent element contained in the module is individually compressed, and

in said information transmission step, when the report of a plurality of expansion methods is received from said external device, the new constituent element compressed by the most suitable method among the methods is transmitted.

**17.** An information processing method for using a module, said information processing method comprising:

a data transferring step of transferring a module from an external device; and
a module using step of using the module;

wherein the module is reconfigured by new constituent elements, which are classified based on individual characteristics, composed of a plurality of basic constituent elements,

each new constituent element is associated with characteristic information, and

when the module transferred in said data transferring step is to be used in said module using step, a process corresponding to the characteristic information associated with the new constituent element is performed transparently to the use of the module.

**18.** A system, apparatus or method according to any one of the preceding claims wherein said module is a computer program which is written in a computer-readable format.

**19.** A system, apparatus or method according to any one of the preceding claims wherein said module is data which can be disassembled into basic constituent elements.

**20.** An information processing apparatus according to claim 11 or method according to Claim 17, wherein, said data transferring step or means transfers the characteristic information together with the new constituent elemen.

**21.** An information processing apparatus according to claim 11 or method according to Claim 17, wherein characteristic information concerning the new transferred constituent element is possessed in advance.

**22.** An information processing apparatus according to claim 11 or method according to Claim 17, wherein, when the transferred module is to be used in said module using step or means, a process corresponding to the characteristic information transferred together with the new constituent element and the characteristic information possessed in advance is performed.

**23.** An information processing apparatus according to claim 11 or method according to Claim 17, wherein, said data transferring step or means transfers first only the new constituent element containing a portion of the module that is used at first by said module using means and thereafter, the transfer is performed in units of the new constituent element as necessary.

**24.** An information processing apparatus according to claim 11 or method according to Claim 17, wherein, said data transferring step or means transfers first only the new constituent element containing a portion of the module that is used at first in said module using step, and thereafter, by referring to the characteristic information, the new constituent element is transferred concurrently to the use of the module before the use of the module by said module using means reaches the new constituent element which is not yet transferred.

**25.** An information processing method according to Claim 17, wherein the new constituent element is selected using the characteristic information, and the new constituent element is transferred in said data transferring step and is stored temporarily, and

in a case where the module is to be used in said module using step, when the new constituent element of the module has already been stored before a data transferring request is made in said module transferring step, the new constituent element is used.

**26.** An information processing apparatus according to claim 11 or method according to Claim 17, further comprising an expansion step or means of expanding compressed data by a predetermined expansion method,

wherein, in said data transferring step or means, said expansion method is reported to said external device when a data transfer request is made, and the new constituent element which is compressed by the corresponding compression method is selectively transferred, and

in said module using step or means, the new constituent element which is transferred by said expansion step or means is used after the new constituent element is expanded.

**27.** An information processing apparatus according to claim 11 or method according to Claim 26, wherein each new constituent element contained in the module is compressed individually,

said expansion means or step supports a plurality of expansion methods, and

the plurality of expansion methods are reported to said external device when a data transfer request is made and the new constituent element which is compressed by the most suitable method is selectively transferred.

**28.** A storage medium having physically stored thereon in a computer-readable format computer software written so as to execute a method according to any one of the preceding method claims.

DVD1

PROGRAM 5

SYSTEM BUS 3

CLIENT 2

CACHE 4

# FIG. 1

PHRASE 0
5-1

PHRASE 1

. . . . . . . . . .

PHRASE N-1

ANNOTATIONS
5-2

ANNOTATION

ANNOTATION

PROGRAM 5

# FIG. 2

ANNOTATION 6

ANNOTATION TYPE 6-1

Refer

ANNOTATION PARAMETER 6-2

phraseID
frequency

# FIG. 3

FIG. 4

FIG. 5

SERVER
11

PROGRAM
11-2

PROGRAM
11-1

NETWORK
14

CLIENT
13

CLIENT
12

COMPANDER
12-2

CACHE
12-1

## FIG. 6

PHRASE 0
15-1

PHRASE 1

· · · · · · · · · · ·

PHRASE N-1

ANNOTATIONS
15-2

ANNOTATION

ANNOTATION

PROGRAM 15

## FIG. 7

annotation_type 16-1

Refer

annotation_parameter 16-2

phase_size
exec_size
reference_phrase
    phraseID
    reference_position
frequency

ANNOTATION 16

# FIG. 8

FIG. 9

EP 1 378 822 A1

FIG. 10

EP 1 378 822 A1

| EXECUTION ENVIRONMENT 12-4 | DOWNLOADER 12-3 | SEMANTICS 12-5 | CACHE OBJECT 12-1 | COMPANDER 12-2 | SERVER 11 |
|---|---|---|---|---|---|

Refer

ReferEntry

Get

Download

Fetch

Eval

Annotation
LoadedEntry

Get

Download(s)

Fetch

Eval

LoadComplete
Entry

Put

Expand

Map

Fetch

# FIG. 11

FIG. 12

## INTERNATIONAL SEARCH REPORT

| International application No. |
| --- |
| PCT/JP02/01407 |

**A. CLASSIFICATION OF SUBJECT MATTER**
Int.Cl$^7$ G06F9/06, G06F9/445

According to International Patent Classification (IPC) or to both national classification and IPC

**B. FIELDS SEARCHED**

Minimum documentation searched (classification system followed by classification symbols)
Int.Cl$^7$ G06F9/06, G06F9/445

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2002 |
| Kokai Jitsuyo Shinan Koho | 1971–2002 | Jitsuyo Shinan Toroku Koho | 1996–2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 11-249973 A (Toshiba Corp.), 17 September, 1999 (17.09.99), Full text; Figs. 1 to 8 & US 6106570 A | 1-51 |
| Y | JP 11-167483 A (Lucent Technology Inc.), 22 June, 1999 (22.06.99), Full text; Figs. 1 to 8 & EP 905615 A2 & US 5953533 A | 1-51 |
| Y | JP 11-232115 A (International Business Machines Corp.), 27 August, 1999 (27.08.99), Full text; Figs. 1 to 5 & GB 2331814 A | 1-51 |

| ☒ Further documents are listed in the continuation of Box C. | ☐ See patent family annex. |
| --- | --- |

\* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 14 May, 2002 (14.05.02) | 28 May, 2002 (28.05.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

**EP 1 378 822 A1**

## INTERNATIONAL SEARCH REPORT

International application No.

PCT/JP02/01407

C (Continuation). DOCUMENTS CONSIDERED TO BE RELEVANT

| Category* | Citation of document, with indication, where appropriate, of the relevant passages | Relevant to claim No. |
|---|---|---|
| A | JP 7-56743 A (Inter Science Kabushiki Kaisha), 03 March, 1995 (03.03.95), Full text; Figs. 1 to 6 (Family: none) | 3,8 |

Form PCT/ISA/210 (continuation of second sheet) (July 1998)

43